# EUROPEAN PATENT APPLICATION

(11) **EP 2 843 738 A1**
(43) Date of publication of application: **04.03.2015**
(21) Application number: 13782353.0
(22) Date of filing: 26.04.2013
(51) Int. Cl.: H01M 4/58, C01B 25/45, H01M 4/136, H01M 4/1397, H01M 4/36, H01M 4/62, H01M 10/052, H01M 10/0566

(54) **COMPOSITION FOR FORMING ELECTRODE OF LITHIUM SECONDARY BATTERY, ELECTRODE, AND LITHIUM SECONDARY BATTERY**

(30) Priority: 27.04.2012 JP 2012103198
(71) Applicant: TOYO INK SC HOLDINGS CO., LTD., Chuo-ku Tokyo 104-8377 (JP); TOYOCOLOR CO., LTD., Chuo-ku Tokyo 104-8381 (JP)
(72) Inventor: ITO, Takanori, Tokyo 104-8377 (JP); HATEMATA, Akihiko, Tokyo 104-8377 (JP); MOROISHI, Yasuyuki, Tokyo 104-8377 (JP); ONAI, Yoshiyuki, Tokyo 104-8381 (JP); SAKAKI, Jyunko, Tokyo 104-8381 (JP)
(74) Representative: Grünecker, Kinkeldey, Stockmair & Schwanhäusser
(86) International application number: PCT/JP2013/062485
(87) International publication number: WO 2013/162025

(57) **Abstract**

A composition for forming an electrode of a lithium secondary battery of the present invention includes: an active material represented by the following general formula (1), which is coated with conductive carbon; a dispersant; a binder; and a solvent, wherein, as the active material, secondary particles with different particle diameters are used in combination with granulated particles wherein the secondary particles are respectively formed from fine primary particles having an average primary particle diameter of 50 to 300 nm.

General formula (1): LiFe₁₋ₓMₓPO₄ (0 ≤ x ≤ 1)

(In the formula, M denotes a metallic element of at least one type selected from the group consisting of Mn, Co, Ni and V.)

## Description

### Technical Field

The present invention relates to a composition for forming an electrode of a lithium secondary battery, an electrode using the composition, and a lithium secondary battery.

### Background Art

In recent years, small-sized portable electronic equipment such as a digital camera and a portable telephone has been widely used. A battery mounted on this electronic equipment needs to be small in size, light in weight and to have large-capacity battery performance. A lithium secondary battery has been noticed as such a battery. On the other hand, also in the field of a large-sized secondary battery to be stationarily used, a large-sized secondary battery of a nonaqueous electrolyte has been desired in place of a conventional lead acid battery. Further, in recent years, from the viewpoint of resource depletion and environmental issues, the use of a secondary battery as a power source has been studied, as is seen in a hybrid automobile and an electric automobile.

In order to meet the request, a lithium secondary battery has been actively developed. For example, an electrode of a lithium secondary battery may be composed of a cathode provided with a cathode mixture layer on a collector surface of metal foil and an anode provided with an anode mixture layer on a collector surface of metal foil. The cathode mixture layer may be formed from a composition for forming an electrode including a cathode active material containing a lithium ion, a conductive assistant and binder resin, for example. On the other hand, the anode mixture layer may be formed from a composition for forming an electrode including an anode active material capable of deinsertion of a lithium ion, a conductive assistant and binder resin, for example.

With regard to the electrode, the distribution state of each component in the mixture layer is important. The reason therefor is that the distribution state influences not merely electrode physical properties but also battery performance. Thus, various methods for controlling the distribution state of each component including the active material have been studied so far.

For example, various methods for disposing the active material in the mixture layer with high filling while using plural active material particles with different average particle diameters together have been reported (Patent Literatures 1 to 4). These methods are effective as a method for improving battery capacity. Patent Literatures 1 and 2 disclose a method for using active material particles with different primary particle diameters as the active material having different average particle diameters. However, according to the method, a difference in particle diameters changes charge and discharge rate, so that a load is easily applied to the active material with small particle diameters to bring a tendency to easily cause the deterioration of cycling characteristics. Further, with regard to the active material low in ion diffusivity and electron conductivity, larger primary particle diameters deteriorate performance further. Thus, in the case of using the active material, the method is adapted with difficulty.

Further, Patent Literatures 3 and 4 disclose a method for grinding particles in order to obtain the active material with different average particle diameters. However, the grinding of active material particles while applying large shear force thereto results easily in the deterioration of original performance offered by the active material. In particular, with regard to lithium metal phosphate composite particles having an olivine structure, the surface thereof is coated with conductive carbon. Thus, in the case of using them as the active material to apply the method, in the process of grinding the particles to obtain the active material with small particle diameters, the uncoated surface is exposed so much as to bring a tendency to deteriorate battery performance substantially.

Besides, a method for using a dispersant in addition to a conventional material in producing a composition for forming an electrode has been also reported (Patent Literature 5). The use of a dispersant allows each component to be uniformly disposed in the mixture layer. However, even in the case of using the dispersant, improvement has been still desired in the viewpoint of strength and film thickening of the mixture layer, adhesion properties between the mixture layer and a current collector, and high-speed charge and discharge characteristics. Thus, further improvement has been desired for realizing the properties of the desired electrode and secondary battery.

### Citation List

### Patent Literature

Patent Literature 1: JP 2006-310311 A
Patent Literature 2: JP 2009-146788 A
Patent Literature 3: JP 2009-283354 A
Patent Literature 4: JP 2003-109592 A
Patent Literature 5: JP 3213944 B1

### Summary of Invention

The object of the present invention is to provide a composition for forming an electrode of a lithium secondary battery capable of disposing an active material in a mixture layer with high filling, and having very excellent charge and discharge capacity even in the case of using a cathode material having an olivine structure inferior in lithium diffusivity and electron conductivity. In addition, the object of the present invention is to provide a composition for forming an electrode of a lithium secondary battery capable of forming a mixture layer excellent in adhesion properties to a current collector and durability without a crack of a coating film even in the case of coating the composition so as to allow a sufficient film thickness on the current collector in producing an electrode having the current collector and the mixture layer.

Through earnest studies for solving the problem in the prior art, the inventors of the present invention have completed a composition for forming an electrode of a lithium secondary battery using two types of active materials, such that primary particle diameters of both are fine and secondary particle diameters are different from each other, and a dispersant. That is to say, the present invention relates to embodiments described below.
<1> A composition for forming an electrode of a lithium secondary battery including a first active material, a second active material, a dispersant, a binder and a solvent, in which:
   the first active material is a secondary particle formed from a coated primary particle that a surface of a primary particle of a lithium metal phosphate composite particle represented by the following general formula (1) is coated with conductive carbon, wherein an average particle diameter of the coated primary particle is from 50 to 300 nm, an average particle diameter of the secondary particle is from 300 nm to 5 µm;
   the second active material is a granulated particle formed from a coated primary particle, such that a surface of a primary particle of a lithium metal phosphate composite particle represented by the following general formula (1) is coated with conductive carbon, an average particle diameter of the coated primary particle is from 50 to 300 nm, and an average particle diameter of the granulated particle is from 5 to 30 µm.

      General formula (1): LiFe₁₋ₓMₓPO₄ (0 ≤ x ≤ 1)

      (In the formula, M denotes a metallic element of at least one type selected from the group consisting of Mn, Co, Ni and V.)
<2> The composition described in the <1>, in which the second active material is a granulated particle produced by using the first active material.
<3> The composition described in the <1> or <2>, in which the dispersant has a functional group of at least one type selected from the group consisting of an acidic functional group, a basic functional group and a hydroxyl group.
<4> The composition described in any one of the <1> to <3>, in which a content of the first active material is within a range of 10 to 90% by weight on the basis of the total weight of the first active material particle and the second active material particle.
<5> The composition described in any one of the <1> to <4>, further including a conductive particulate carbon material.
<6> The composition described in any one of the <1> to <5>, in which the conductive particulate carbon material contains at least one type selected from the group consisting of carbon black, graphite, fibrous carbon and graphene.
<7> An electrode for a lithium secondary battery having a current collector and a mixture layer formed on a surface of the current collector, in which the mixture layer is a dry coating film formed by using the composition described in any one of the <1> to <6>.
<8> The electrode described in the <7>, in which a film thickness of the dry coating film is 90 µm or more.
<9> A lithium secondary battery having a cathode, an anode and a liquid electrolyte, in which the cathode is the electrode described in the <7> or <8>.

The present invention may provide a composition for forming an electrode of a lithium secondary battery capable of disposing an active material in a mixture layer with high filling, and having no cracks of a coating film even in the case of coating the composition so as to allow a sufficient film thickness on a current collector. Further, the composition for forming an electrode of a lithium secondary battery of the present invention may form the mixture layer excellent in adhesion properties to the current collector, and may provide a secondary battery excellent in durability, charge and discharge capacity, and high-speed charge and discharge characteristics.

The disclosure of the present invention relates to the subject of Patent Application No. 2012-103198 filed on April 27, 2012, and the disclosure of these specifications is incorporated into the present specification for reference on the whole.

### Description of Embodiments

The present invention is hereinafter described in detail.

### <I> A composition for forming an electrode of a lithium secondary battery

A first embodiment of the present invention relates to a composition for forming an electrode of a lithium secondary battery. The composition includes first and second active materials, a dispersant, a binder and a solvent. Each component is hereinafter described specifically.

### <First and second active materials>

The composition of the present invention uses as the active materials a lithium metal phosphate composite particle represented by the following general formula (1), whose surface is coated with conductive carbon.

General formula (1): LiFe₁₋ₓMₓPO₄ (0 ≤ x ≤ 1)

(In the formula, M denotes a metallic element of at least one type selected from the group consisting of Mn, Co, Ni and V.)

Specific examples of the lithium metal phosphate composite particle represented by the general formula (1) include LiFePO₄, LiMnPO₄ and LiFe_{0.5}Mn_{0.5}PO₄. However, the active materials in the composition of the present invention are not limited to the specific examples but may be any compound represented by the general formula (1).

The composition of the present invention is characterized by using as the active materials two types of particles with different average particle diameters, which are formed from the compound. That is to say, the present invention has a combination of a first active material and a second active material described below as the essentials.

The first active material is a secondary particle formed from a coated primary particle, such that a surface of a primary particle of a lithium metal phosphate composite particle represented by the general formula (1) is coated with conductive carbon. An average particle diameter of the coated primary particle is from 50 to 300 nm, preferably from 60 to 250 nm. Further, an average particle diameter of the secondary particle is from 300 nm to 5 µm, preferably from 400 nm to 3 µm.

In the present invention, the first active material is a secondary particle formed by aggregation of the primary particle obtained in a normal synthesis process of the lithium metal phosphate composite particle. Here, each of the primary particles composing the secondary particle has a covering layer of conductive carbon on a surface thereof. That is to say, "secondary particle" described in the present specification signifies an aggregate itself (essentially an untreated state) of the coated primary particle obtained not through intentional aggregation step or granulation step.

However, in the present invention, any treatment for the secondary particle is not excluded. For example, in the case where an aggregate (the secondary particle) of the primary particle of a lithium metal phosphate composite particle, which is obtained in a normal synthesis process, is a coarse particle, the first active material may be the secondary particle obtained through step of grinding the coarse particle. However, the grinding step intends cracking of the aggregate. That is to say, the grinding step does not signify step such that so excessive shear force is applied to the particle that D50 becomes a half or less. Incidentally, in the present specification, the secondary particle is occasionally referred to as the first active material particle.

On the other hand, the second active material is a granulated particle formed from a coated primary particle, such that a surface of a primary particle of a lithium metal phosphate composite particle represented by the general formula (1) is coated with conductive carbon. An average particle diameter of the coated primary particle is from 50 to 300 nm, preferably from 60 to 250 nm. An average particle diameter of the granulated particle is from 5 to 30 µm, preferably from 8 to 20 µm.

In the present invention, the second active material is a granulated particle formed by using the primary particle obtained in a normal synthesis process of the lithium metal phosphate composite particle. Here, each of the primary particles composing the granulated particle has a covering layer of conductive carbon on a surface thereof. In the present invention, the granulated particle may be a particle obtained by granulating the first active material. Incidentally, in the present specification, the granulated particle is occasionally referred to as the second active material particle.

As described above, each of the first and second active materials used in the composition of the present invention is composed of a fine coated primary particle with an average particle diameter of 50 to 300 nm. Thus, in the case where the composition of the present invention is used as an electrode material of a lithium secondary battery, a distance from the central portion of the each particle to a liquid electrolyte is so short that diffusivity of a lithium ion is easily improved.

An average particle diameter of the coated primary particle composing the first and second active materials is not particularly limited if the average particle diameter is within the range. An average particle diameter of the coated primary particle in the each active material may be the same or different. In an embodiment of the present invention, a difference in an average particle diameter of each coated primary particle between the first active material and the second active material is preferably 100 nm or less. The difference in an average particle diameter of the coated primary particle is determined within the range, so that a trouble such that a load is biased toward part of the active materials to deteriorate durability may be easily avoided.

A synthesis method for the compound used as the active materials in the present invention is not particularly limited. For example, publicly known methods such as a solid phase method, a hydrothermal method and an atomized pyrolysis method may be applied for synthesizing a lithium metal phosphate composite particle represented by the general formula (1), whose surface is coated with conductive carbon.

A method for coating the surface of the metal composite particle with conductive carbon is not particularly limited. For example, a method for burning a precursor of conductive carbon together with the metal composite particle under an inert atmosphere may be applied. Further, a method for supporting conductive particulate carbon material on the surface of the metal composite particle by using a dry method or a wet method may be applied. In the case of using the latter method, the further addition of burning step of the carbon material under an inert atmosphere allows a firmer film to be formed.

Whether the surface of the metal composite particle is coated with conductive carbon or not may be confirmed by the observation of a cross section of the particle by using a transmission electron microscope, and the analysis of Raman band on the surface of the particle by Raman spectroscopy.

The first active material used in the present invention is the secondary particle formed by aggregating the coated primary particle obtained by the step. However, after synthesizing the active material in accordance with the step, the first active material may be produced through step of decreasing the particle diameter of the obtained secondary particle. However, it is presumed that coating carbon on the surface of the coated primary particle is not damaged.

The second active material used in the present invention may be produced by granulating the coated primary particle obtained by the step. Further, the second active material may be produced in such a manner that the metal composite particle uncoated with conductive carbon and a precursor of conductive carbon are granulated together and thereafter burned. The second active material may be produced by granulating the first active material of the present invention.

A granulation method for forming the second active material is not particularly limited. For example, a method for producing slurry in which an active material particle is dispersed into a solvent and the solvent is subsequently removed from the solvent may be applied. A precursor of conductive carbon and additives such as a binder or an antifoaming agent may be added to the slurry as required. Otherwise, conductive particulate carbon materials such as acetylene black, Ketjen black or carbon nanotube may be added. In the present invention, type and added amount of the additives are not particularly limited.

In the present invention, a granulated particle as the second active material may be produced by any method if the granulated particle is such as to have a predetermined average particle diameter. The method is not limited but examples of a preferable embodiment include a method including step (A) of obtaining slurry in which an active material, a dispersant and a solvent are mixed, and step (B) of removing the solvent from the slurry.

In the step (A) of obtaining slurry, a method for dispersing an active material into a solvent is applied. Examples thereof include a method for adding an active material in a solution containing a dispersant, which are mixed while stirred. Examples of dispersing and mixing equipment to be used include an ultrasonic disperser, a stirring disperser, a high-speed rotary shearing disperser, a mill disperser and a high-pressure injection disperser. Here, the "a state of dispersing an active material" described in the present specification signifies a state such that slurry is sampled and diluted into a predetermined concentration and the granularity becomes less than 15 µm in measuring granularity (JIS K5101) by a fineness-of-grind gauge.

In the step (B) of removing a solvent, a method for removing the solvent from the slurry to obtain a granulated particle is applied. For example, publicly known methods as a granulation method may be applied, such as drying by heating or spray drying by a high-speed stirrer. The spray drying is a method for dispersing an active material with a dispersant into a solvent to subsequently spray under a high-temperature atmosphere, and allows a granulated particle of an active material bound with a dispersant to be formed while instantaneously blowing away a solvent.

The slurry prepared in producing a granulated particle is preferably in a state such that an active material particle is well dispersed into a solvent. Further, a granulated particle bonded densely is preferably produced by utilizing an interaction between an acidic group and a basic group in granulating. Such a granulated particle may be obtained by mixing slurry, in which an active material particle is dispersed by an acidic dispersant, with slurry, in which an active material particle is dispersed by a basic dispersant, and granulating the mixed slurry by drying.

In the step (B), a method for removing a solvent is not particularly limited. For example, the method may be selected from among spray drying, drying by stirring, and ventilation drying. Above all, a spray dryer may be appropriately used by reason of being capable of granulating the particle into a spherical shape for being easily filled.

Further, step of burning may be added after granulating. In the case of adding organic matter such as a binder as an additive to the slurry, the organic matter is carbonized by burning the obtained granulated particle under an inert atmosphere. The organic matter may be appropriately used by reason of not badly influencing on battery performance.

The inert atmosphere may be an atmosphere filled with nitrogen or argon, for example. As another example, the inert atmosphere may be a vacuum atmosphere.

An average particle diameter of a coated primary particle described in the present invention is an average value of 100 measured values obtained in such a manner that the coated primary particle is observed by a magnified image (1000 times to 50000 times) of a scanning electron microscope (SEM) to measure the major axis of the particle with respect to 100 pieces sampled at random. Further, an average particle diameter of a first active material as a secondary particle and a second active material as a granulated particle is an average value of 100 measured values obtained in such a manner that the secondary particle and granulated particle are observed by a scanning electron microscope to measure the major axis of the secondary particle and granulated particle with respect to 100 pieces sampled at random.

In the composition of the present invention, the content of the first active material particle is preferably within a range of 10 to 90% by weight with respect to the total weight of the first active material particle and the second active material particle. The content of the first active material particle is more preferably within a range of 20 to 90% by weight. When the content of the first active material particle is less than 50% by weight, the ratio of the second active material particle becomes so large as to lead to a result of using only the second active material particle. Specifically, there is a tendency to easily deteriorate adhesion properties and battery characteristics in high density. On the other hand, when the content of the first active material particle is more than 80% by weight, the effect of using together with the second active material particle becomes so declined as to bring a tendency toward film thickening with difficulty. From such a viewpoint, in an embodiment of the present invention, the content of the first active material particle is far more preferably within a range of 50 to 80% by weight. The determination of the content of the first active material particle within the range allows the active material to be easily filled highly into a mixture layer; also, the use of the first and second active materials together facilitates the well-balanced improvement of various properties.

In the composition of the present invention, compressive breaking strength (MPa) of the second active material particle is not particularly limited. For example, in the present invention, compressive breaking strength may be determined within a range of 0.2 to 20 MPa for the reason that the active material with a small primary particle diameter is granulated and produced. The range becomes evidence to granulate the active material with a small primary particle diameter.

The compressive breaking strength (MPa) may be measured by using a microcompression tester (trade name: MCT-W501, manufactured by Shimadzu Corporation).

### <Dispersant>

A dispersant in the composition of the present invention is not particularly limited if the dispersant is such as to be capable of favorably dispersing an active material in a dispersion solvent. However, in the present invention, the use of an appropriate dispersant easily allows a composition, in which active materials with different particle diameters are favorably dispersed, by dispersing the first active material particle and the second active material particle. In addition, the use of such a composition allows a mixture layer with the active materials filled highly, which is excellent in adhesion properties, flexibility and battery characteristics, to be provided.

As an embodiment of the present invention, the dispersant has a functional group of at least one type selected from the group consisting of an acidic functional group, a basic functional group and a hydroxyl group. More specifically, the dispersant is preferably a resin dispersant or various types of derivatives having the functional group, such as an organic coloring matter derivative, an anthraquinone derivative, an acridone derivative and a triazine derivative. The dispersant usable in the present invention is hereinafter described specifically.

### (Resin dispersant)

In the composition of the present invention, a preferable embodiment of the dispersant is a resin dispersant. Specific examples of the resin dispersant include an anionic dispersant, a cationic dispersant, an ampholytic dispersant and a dispersant having a hydroxyl group. These resin dispersants may be a polymer or a neutralized substance of the polymer, having a functional group of at least one type selected from the group consisting of an acidic functional group, a basic functional group and a hydroxyl group.

The resin dispersant may be used more appropriately in an embodiment using an aqueous solvent as a solvent for the composition. While not restrained by theory, a hydrophobic site of the resin dispersant in an aqueous liquid medium may become a main adsorption site for the active material. Meanwhile, a hydrophilic site including a functional group of at least one type selected from the group consisting of an acidic functional group, a basic functional group and a hydroxyl group has the function of dissolving or dispersing a neutralized substance of the polymer in the aqueous liquid medium. As a result, it is conceived that a dispersion state of the active material in the aqueous liquid medium may be stabilized by electric charge repulsion. The resin dispersant usable in the present invention is hereinafter described more specifically.

### (Ampholytic dispersant)

Examples of the ampholytic dispersant include a copolymer of an unsaturated ethylene monomer having an aromatic ring (a1), an unsaturated ethylene monomer having a carboxyl group (a2), an unsaturated ethylene monomer having an amino group (a3) and an unsaturated ethylene monomer (a4) except (a1), (a2) and (a3), and a neutralized substance of the copolymer. The ratio of the monomers composing the copolymer in the ampholytic dispersant is (a1) of 5 to 70% by weight, (a2) of 15 to 60% by weight, (a3) of 1 to 80% by weight and (a4) of 0 to 79% by weight on the basis of the total weight of the monomers (a1) to (a4). The ratio is preferably (a1): 20 to 70% by weight, (a2): 15 to 45% by weight, (a3): 1 to 70% by weight and (a4): 0 to 50% by weight. The ratio is more preferably (a1): 30 to 70% by weight, (a2): 15 to 35% by weight, (a3): 1 to 40% by weight and (a4): 0 to 40% by weight.

Here, specific examples of the monomers (a1) to (a4) composing the dispersant are as follows.

### (a1) an unsaturated ethylene monomer having an aromatic ring:

The (a1) is not particularly limited if it is an unsaturated ethylene monomer having an aromatic ring. Examples thereof include styrene, α-methyl styrene and benzyl(meth)acrylate.

### (a2) an unsaturated ethylene monomer having a carboxyl group:

The (a2) is not particularly limited if it is an unsaturated ethylene monomer having a carboxyl group. Examples thereof include maleic acid, fumaric acid, itaconic acid and citraconic acid; alkyl or alkenyl monoester thereof, phthalic acid β-(meth)acryloxyethyl monoester, isophthalic acid β-(meth)acryloxyethyl monoester, terephthalic acid β-(meth)acryloxyethyl monoester and succinic acid β-(meth)acryloxyethyl monoester; and acrylic acid, methacrylic acid, crotonic acid and cinnamic acid. In particular, methacrylic acid and acrylic acid are preferable.

### (a3) an unsaturated ethylene monomer having an amino group:

The (a3) is not particularly limited if it is an unsaturated ethylene monomer having an aliphatic amino group or an aromatic amino group. With regard to the monomer having an aliphatic amino group, examples of the monomer having an ethylenically unsaturated group in a molecule include dimethylaminoethyl(meth)acrylate, diethylaminoethyl(meth)acrylate, methylethylaminoethyl(meth)acrylate, N,N-dimethylaminopropyl(meth)acrylate and allylamine. Further, examples of the monomer having two ethylenically unsaturated groups in a molecule include diallylamine and diallylmethylamine. Examples of the monomer having an aromatic amino group include aminostyrene, dimethylaminostyrene and diethylaminostyrene.

### (a4) an unsaturated ethylene monomer except the (a1), (a2) and (a3):

Examples of the (a4) include a (meth)acrylate type compound. More specific examples thereof include alkyl type (meth)acrylate and alkylene glycol type (meth)acrylate.

### (Anionic dispersant)

Examples of the anionic dispersant include resin having at least one functional group of carboxyl group and sulfonic acid group as an anionic site. With regard to the anionic dispersant, it is preferable that acid value is from 100 to 600 mgKOH/g, hydroxyl value is from 0 to 400 mgKOH/g, and weight-average molecular weight is 5000 or more.

The anionic dispersant having sulfonic acid group is not particularly limited if it is resin having sulfonic acid group. For example, a formalin condensate of aromatic sulfonic acid group may be used. The formalin condensate of aromatic sulfonic acid is obtained by condensing benzenesulfonic acid, alkylbenzenesulfonic acid and naphthalenesulfonic acid (or alkali metal salt thereof) with formalin, for example.

The anionic dispersant having carboxyl group is not particularly limited if it is resin having a carboxyl group. Examples of a preferable embodiment of the present invention include a polymer of an unsaturated monomer having a carboxyl group such as (meth)acrylic acid. Alternatively, a preferable embodiment may be a copolymer of an unsaturated monomer having a carboxyl group and another polymerizable compound. More specifically, examples thereof include a copolymer obtained by copolymerizing the unsaturated ethylene monomer having an aromatic ring (a1), the unsaturated ethylene monomer having a carboxyl group (a2) and the unsaturated ethylene monomer (a4), and a neutralized substance of the copolymer. The details of the monomers (a1), (a2) and (a4) are as described above. Further, the monomers (a1)and (a4) are optional components in the dispersant.

The ratio of the unsaturated ethylene monomers composing the copolymer in the anionic dispersant is preferably (a1) of 10 to 80% by weight, (a2) of 20 to 75% by weight and (a4) of 0 to 70% by weight on the basis of the total weight of the monomers (a1) to (a4). The ratio is more preferably (a1) of 10 to 60% by weight, (a2) of 40 to 75% by weight and (a4) of 0 to 50% by weight.

The anionic dispersant may be produced by polymerizing or condensing a monomer having a carboxyl group or a sulfonic group. The acid value of the anionic dispersant is preferably within a range of 100 mgKOH/g or more to 600 mgKOH/g or less, more preferably within a range of 300 mgKOH/g or more to 600 mgKOH/g or less. The component ratio of a monomer having an anionic functional group to all monomers composing the dispersant is preferably adjusted so that the acid value of the anionic dispersant is in the range.

When the acid value of the anionic dispersant is less than the range, there is a tendency to deteriorate decentralized stabilization of a dispersing element and increase viscosity. Further, when the acid value is more than the range, there is a tendency to deteriorate adhesive force of the anionic dispersant to the pigment surface and deteriorate storage stability of a dispersing element. Incidentally, the acid value is a value obtained by converting an acid value (mgKOH/g) measured in conformity to the potentiometric titration method of JIS K 0070 into a solid content.

### (Cationic dispersant)

Examples of the cationic dispersant include resin having an amino group as a cationic site. With regard to the resin, it is preferable that amine value is from 110 to 1000 mgKOH/g, hydroxyl value is from 0 to 400 mgKOH/g, and weight-average molecular weight is 5000 or more. The amino group may be aliphatic amine or aromatic amine.

The cationic dispersant having aliphatic amine or aromatic amine is not particularly limited if it is resin having aliphatic amine or aromatic amine. For example, the cationic dispersant is resin obtained by polymerizing or condensing a monomer having an aliphatic amino group or an aromatic amino group. The cationic dispersant is preferably resin obtained by polymerizing an unsaturated ethylene monomer having an aliphatic amino group or an aromatic amino group, which is exemplified as (a3) in the above. The monomer may be used by one type or in a combination of plural types.

Further, the cationic dispersant in the present invention may be a copolymer of the unsaturated ethylene monomer having an aliphatic amino group or an aromatic amino group and another polymerizable compound. Examples thereof include a copolymer obtained by copolymerizing the unsaturated ethylene monomer having an aromatic ring (a1), the unsaturated ethylene monomer having an aliphatic amino group or an aromatic amino group (a3) and the unsaturated ethylene monomer (a4), and a neutralized substance of the copolymer. The details of the monomers (a1), (a3) and (a4) are as described above. Further, the monomers (a1) and (a4) are optional components in an embodiment of the dispersant.

The ratio of the unsaturated ethylene monomers composing the copolymer in the cationic dispersant is preferably (a1) of 0 to 30% by weight, (a3) of 30 to 80% by weight and (a4) of 0 to 70% by weight on the basis of the total weight of the monomers (a1) to (a4). The ratio is more preferably (a1) of 0 to 30% by weight, (a3) of 50 to 80% by weight and (a4) of 0 to 50% by weight.

The cationic dispersant may be produced by polymerizing or condensing a monomer having an amino group. The amine value of the cationic dispersant is preferably within a range of 110 mgKOH/g or more to less than 1000 mgKOH/g, more preferably within a range of 250 mgKOH/g or more to less than 1000 mgKOH/g. The component ratio of a monomer having a cationic functional group to all monomers composing the dispersant is preferably adjusted so that the amine value of the cationic dispersant is in the range.

When the amine value of the cationic dispersant is less than the range, there is a tendency to deteriorate decentralized stabilization of a dispersing element and increase viscosity. Further, when the amine value is more than the range, there is a tendency to deteriorate adhesive force of the cationic dispersant to the pigment surface and deteriorate storage stability of a dispersing element. Incidentally, the amine value is represented by number of mg of potassium hydroxide equivalent to perchloric acid necessary for neutralizing all basic nitrogen contained in 1 g of a sample. The amine value is a value obtained by converting a value measured by the potentiometric titration method described in JIS K 7237 (1995) as a measuring method into a solid content.

### (Dispersant having hydroxyl group)

The dispersant having a hydroxyl group may be produced by polymerizing or condensing an unsaturated ethylene monomer having a hydroxyl group. Further, the dispersant having a hydroxyl group may be produced by copolymerizing vinyl ester as a derivative of vinyl alcohol to saponify an obtained copolymer. Examples of the dispersant having a hydroxyl group include a copolymer obtained by copolymerizing the unsaturated ethylene monomer containing a hydroxyl group and another unsaturated ethylene monomer. Another unsaturated ethylene monomer composing the copolymer is an optional component, and the dispersant is not limited to a copolymer but may be a single polymer.

The monomer containing a hydroxyl group is not particularly limited if it is an unsaturated ethylene monomer containing a hydroxyl group. Examples thereof include 2-hydroxyethyl (meth)acrylate, 2-hydroxypropyl (meth)acrylate, 4-hydroxybutyl (meth)acrylate, glycerol mono(meth)acrylate, 4-hydroxystyrene, vinyl alcohol and allyl alcohol. Further, an example of a derivative of the vinyl alcohol may be vinyl ester. Examples of more specific compounds include vinyl acetate, vinyl propionate and vinyl versatate. In an embodiment of the present invention, polyvinyl alcohol and polyvinyl acetal may be used as the dispersant.

The hydroxyl value of the resin dispersant having a hydroxyl group is desirably within a range of 0 mgKOH/g or more to 400 mgKOH/g or less, more preferably within a range of 0 mgKOH/g or more to 250 mgKOH/g or less. In the case of using the dispersant with a hydroxyl value of less than 400 mgKOH/g, the influence of an interaction between molecules in an aqueous medium is brought with such difficulty as to easily restrain the troubles that viscosity increase of a dispersant solution and dispersibility deterioration of an active material.

The resin dispersant used in the present invention may be resin composed of an optional combination of the various types of monomers. The dispersant may be prepared by applying a well-known method in the technical field. An additive such as a polymerization initiator may be used as required. The initiator usable in the present invention is not particularly limited but an azo initiator such as "V-601" manufactured by Wako Pure Chemical Industries, Ltd. may be used. In the case of using a polymerization initiator, a added amount thereof is preferably within a range of 1 to 10% by weight on the basis of the total weight of all monomers.

The weight-average molecular weight of the resin dispersant used in the present invention is preferably 4000 or more, more preferably 6000 or more. Further, the upper limit value thereof is preferably 100000 or less, more preferably 50000 or less from the viewpoint of handleability. A weight-average molecular weight of 4000 or more facilitates the achievement of favorable dispersion of a carbon material as an electrode active material or a conductive assistant. Further, a weight-average molecular weight of 6000 or more in the dispersant causes the dispersant to be eluted into a liquid electrolyte with such difficulty as to allow the improvement of battery performance to be easily achieved.

In an embodiment of the present invention, a neutralized substance (a salt) may be formed by adding a neutralizer in preparing the resin dispersant. The obtained salt of an acidic functional group and a basic functional group is easily dissociated in an aqueous medium and electrified more easily. Thus, the conductive carbon surface and the cathode and anode active material surface, in which the neutralized resin dispersant is adsorbed, are electrified and repulsion thereof improves dispersibility further.

### (Various types of derivatives)

In the composition of the present invention, another preferable embodiment of the dispersant is an organic coloring matter derivative, an anthraquinone derivative, an acridone derivative or a triazine derivative (occasionally abbreviated as various types of derivatives hereinafter). The various types of derivatives are compounds having a functional group of at least one type selected from the group consisting of an acidic functional group, a basic functional group and a hydroxyl group. The various types of derivatives are also described in JP 2010-061934 A and JP 2010-061934 A. In particular, a synthesis method for a derivative having an acidic functional group may be referred to JP 39-28884 B, JP 45-11026 B, JP 45-29755 B, JP 64-5070 B and JP 2004-217842 A, for example. Further, a synthesis method for various types of derivatives having a basic functional group may be referred to JP 54-62227 A, JP 56-118462 A, JP 56-166266 A, JP 60-88185 A, JP 63-305173 A, JP 3-2676 A and JP 11-199796 A, for example. In the present invention, they are incorporated into part of the present specification by referring thereto.

The various types of derivatives may be used more appropriately in an embodiment using a nonaqueous solvent as a solvent for the composition. While not restrained by theory, when the various types of derivatives are used as the dispersant, it is conceived that an organic coloring matter site, or anthraquinone, acridone or triazine site each acts (such as, adsorbs) on the surface of an active material to thereby perform the effect of dispersing. Then, a functional group such as an acidic functional group, a basic functional group or a hydroxyl group in the various types of derivatives, which acts on the surface of the active material, is polarized or dissociated, so that an electrical interaction (a repulsion action) is induced. As a result, it is conceived that a dispersion state of the active material in the nonaqueous liquid medium of the active material may be stabilized. The various types of derivatives usable as the dispersant in the present invention are hereinafter described more specifically.

### (Various types of derivatives having acidic functional group)

Preferable examples of various types of derivatives having an acidic functional group usable in the present invention include a triazine derivative represented by the following general formula (11) or an organic coloring matter derivative represented by a general formula (14).

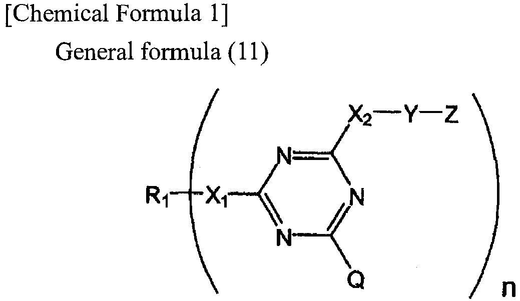

In the formula,
X₁ denotes -NH-, -O-, -CONH-, -SO₂NH- -CH₂NH-, -CH₂NHCOCH₂NH- or -X₃-Y-X₄-. X₂ and X₄ each independently denote -NH- or -O-. X₃ denotes -CONH-, -SO₂NH- -CH₂NH-, -NHCO- or -NHSO₂-.

Y denotes an alkylene group, an alkenylene group or an arylene group which have a carbon number of 1 to 20, and each of them may have a substituent.

Z denotes -SO₃M, -COOM or -P(O)(-OM)₂.

M denotes an equivalent of a monovalent to trivalent cation.

R₁ denotes an organic coloring matter residue, a heterocyclic residue optionally having a substituent, an aromatic ring residue optionally having a substituent, or a group represented by the following general formula (12).

Q denotes -O-R₂, -NH-R₂, a halogen group, -X₁-R₁ or -X₂-Y-Z. R₂ denotes a hydrogen atom, an alkyl group optionally having a substituent, or an alkenyl group optionally having a substituent.

n denotes an integer of 1 to 4.

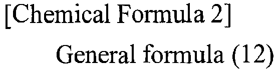

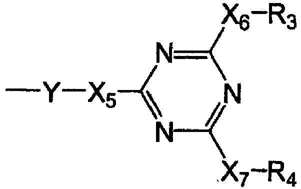

In the formula,

X₅ denotes -NH- or -O-. X₆ and X₇ each independently denote -NH-, -O-, -CONH-, -SO₂NH-, -CH₂NH- or -CH₂NHCOCH₂NH-.

R₃ and R₄ each independently denote an organic coloring matter residue, a heterocyclic residue optionally having a substituent, an aromatic ring residue optionally having a substituent, or -Y-Z. Y and Z are the same as the general formula (11).

Examples of the organic coloring matter residue represented by R₁ of the general formula (11) and R₃ and R₄ of the general formula (12) include the following: diketopyrrolopyrrole coloring matter; azo coloring matter such as azo, disazo and polyazo; phthalocyanine coloring matter; anthraquinone coloring matter such as diaminodianthraquinone, anthrapyrimidine, flavanthrone, anthoanthrone, indanthrone, pyranthrone and violanthrone; quinacridon coloring matter; dioxazine coloring matter; perinone coloring matter; perylene coloring matter; thioindigo coloring matter; isoindolin coloring matter; isoindolinone coloring matter; quinophthalone coloring matter; threne coloring matter; and metal complex coloring matter. Above all, the organic coloring matter residue except metal complex coloring matter is preferably used for improving the effect of restraining a battery from short-circuiting due to metal. Among them, azo coloring matter, diketopyrrolopyrrole coloring matter, metal-free phthalocyanine coloring matter, quinacridon coloring matter and dioxazine coloring matter are preferable. In the case of using these as the dispersant, excellent dispersibility is easily obtained.

Examples of the heterocyclic residue and the aromatic ring residue represented by R₁ of the general formula (11) and R₃ and R₄ of the general formula (12) include thiophene, furan, pyridine, pyrazole, pyrrole, imidazole, isoindolinone, isoindolinone, benzimidazolone, benzthiazole, benztriazole, indole, quinoline, carbazole, acridine, benzene, naphthalin, anthracene, fluorene, phenanthrene and anthraquinone. Above all, the heterocyclic residue containing at least any of hetero atoms of S, N and O is preferable. In the case of using these, excellent dispersibility is easily obtained.

Y of the general formula (11) and the general formula (12) denotes an alkylene group, an alkenylene group or an arylene group which have a carbon number of 20 or less, and each of them may have a substituent. Preferable specific examples thereof include a phenylene group, a biphenylene group and a naphthylene group, each of which may be substituted, or an alkylene group optionally having a side chain with a carbon number of 10 or less.

An alkyl group and an alkenyl group optionally having a substituent, represented by R₂ included in Q of the general formula (11), are preferably composed of a carbon number of 20 or less. More preferable examples of R₂ include an alkyl group optionally having a side chain with a carbon number of 10 or less. An alkyl group or an alkenyl group having a substituent is such that a hydrogen atom of an alkyl group or an alkenyl group is substituted with a halogen group such as a fluorine atom, a chlorine atom and a bromine atom, a hydroxyl group, and a mercapto group.

In the general formula (11), M denotes an equivalent of a monovalent to trivalent cation. For example, it denotes any of a hydrogen atom (a proton), a metal cation and a quaternary ammonium cation. Further, in the case of having two more of M in the dispersant structure, M may be only any one of a proton, a metal cation and a quaternary ammonium cation, or a combination thereof. Examples of the metal include lithium, sodium, potassium, calcium, barium, magnesium, aluminum, nickel and cobalt.

The quaternary ammonium cation is a single compound or a mixture having a structure represented by the general formula (13).

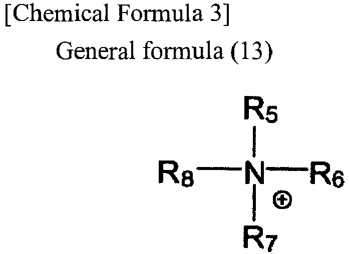

In the formula,

R₅, R₆, R₇ and R₈ denote hydrogen, or any of an alkyl group, an alkenyl group or an aryl group, each of which may have a substituent.

Each of R₅, R₆, R₇ and R₈ of the general formula (13) may be the same or different. Further, in the case where R₅, R₆, R₇ and R₈ have a carbon atom, the carbon number is 1 to 40, preferably 1 to 30, more preferably 1 to 20. A carbon number of more than 40 occasionally causes electrical conductivity of an electrode to deteriorate.
[Chemical Formula 4]

General formula (14) R₉(-X₈-Z)ₙ

In the formula,

X₈ denotes direct coupling, -NH-, -O-, -CONH-, -SO₂NH-, -CH₂NH-, -CH₂NHCOCH₂NH-, -X₉-Y or -X₉-Y-X₁₀-.

X₉ denotes -CONH-, -SO₂NH-, -CH₂NH-, -NHCO- or -NHSO₂-. X₁₀ denotes NH- or -O-. Y denotes an alkylene group, an alkenylene group or an arylene group which have a carbon number of 1 to 20, and each of them may have a substituent.

Z denotes -SO₃M, -COOM or -P(O)(-OM)₂. M denotes an equivalent of a monovalent to trivalent cation.

R₉ denotes an organic coloring matter residue, and n denotes an integer of 1 to 4.

Examples of the organic coloring matter residue represented by R₉ of the general formula (14) include diketopyrrolopyrrole coloring matter; azo coloring matter such as azo, disazo and polyazo; phthalocyanine coloring matter; anthraquinone coloring matter such as diaminodianthraquinone, anthrapyrimidine, flavanthrone, anthoanthrone, indanthrone, pyranthrone and violanthrone; quinacridon coloring matter; dioxazine coloring matter; perinone coloring matter; perylene coloring matter; thioindigo coloring matter; isoindolin coloring matter; isoindolinone coloring matter; quinophthalone coloring matter; threne coloring matter; and metal complex coloring matter. The organic coloring matter residue represented by R₉ contains a pale yellow anthraquinone residue which is not generally called coloring matter. Above all, the organic coloring matter residue except metal complex coloring matter is preferably used for improving the effect of restraining a battery from short-circuiting due to metal. Among them, azo coloring matter, diketopyrrolopyrrole coloring matter, metal-free phthalocyanine coloring matter, quinacridon coloring matter and dioxazine coloring matter are preferable. In the case of using them as the dispersant, excellent dispersibility is easily obtained.

M in the general formula (14) denotes an equivalent of a monovalent to trivalent cation. For example, it denotes any of a hydrogen atom (a proton), a metal cation and a quaternary ammonium cation. Further, in the case of having two more of M in the dispersant structure, M may be only any one of a proton, a metal cation and a quaternary ammonium cation, or a combination thereof. Examples of the metal include lithium, sodium, potassium, calcium, barium, magnesium, aluminum, nickel and cobalt.

(Various types of derivatives having basic functional group)

A triazine derivative represented by the following general formula (21) or an organic coloring matter derivative represented by a general formula (26) is preferably used as various types of derivatives having a basic functional group.

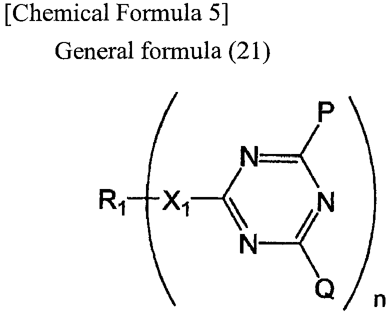

In the formula,

X₁ denotes NH-, -O-, -CONH-, -SO₂NH-, -CH₂NH-, -CH₂NHCOCH₂NH- or -X₂-Y-X₃-. X₂ denotes -NH-, -O-, -CONH-, -SO₂NH-, -CH₂NH-, -NHCO- or -NHSO₂-. X₃ each independently denotes -NH- or -O-. Y denotes an alkylene group, an alkenylene group or an arylene group which have a carbon number of 1 to 20, and each of them may have a substituent.

P denotes a substituent represented by any of a general formula (22), (23) or (24).

Q denotes -O-R₂, -NH-R₂, a halogen group, -X₁-R₁ or a substituent represented by any of a general formula (22), (23) or (24).

R₂ denotes a hydrogen atom, an alkyl group, an alkenyl group or an aryl group, each of which may have a substituent.

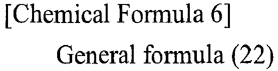

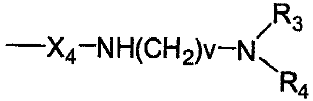

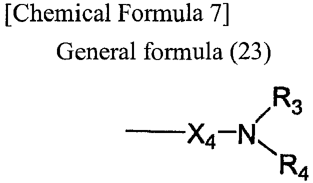

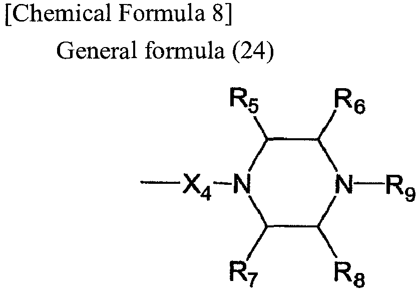

In the formulae (22) to (24),

X₄ denotes direct coupling, -SO₂-, -CO-, -CH₂NHCOCH₂-, -CH₂NHCONHCH₂-, -CH₂-or-X₅-Y-X₆-.

X₅ denotes -NH- or -O-, and X₆ denotes direct coupling, -SO₂-, -CO-, -CH₂NHCOCH₂-, -CH₂NHCONHCH₂- or -CH₂-.

Y denotes an alkylene group optionally having a substituent, an alkenylene group optionally having a substituent, or an arylene group optionally having a substituent, with a carbon number of 1 to 20.

v denotes an integer of 1 to 10.

R₃ and R₄ each independently denote a hydrogen atom, an alkyl group optionally substituted, an alkenyl group optionally substituted, an aryl group optionally substituted, or a heterocyclic residue optionally substituted, integrally containing nitrogen, oxygen or sulfur atom further. Above all, it is preferable that a hydrogen atom is conceived to offer a high effect of restraining metal from precipitating in a battery.

R₅, R₆, R₇ and R₈ each independently denote a hydrogen atom, an alkyl group, an alkenyl group or an aryl group, each of which may be substituted.

R₉ denotes an alkyl group, an alkenyl group or an aryl group, each of which may be substituted.

n denotes an integer of 1 to 4.

R₁ denotes an organic coloring matter residue, a heterocyclic residue optionally having a substituent, an aromatic ring residue optionally having a substituent, or a group represented by the following general formula (25).

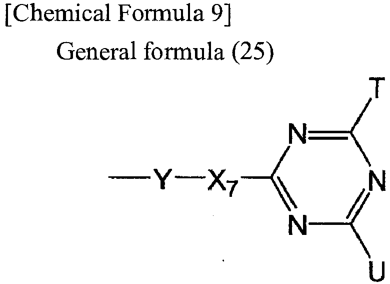

In the formula,

T denotes -X₈-R₁₀ or W₁, and U denotes -X₉-R₁₁ or W₂.

W₁ and W₂ each independently denote -O-R₂, -NH-R₂, a halogen group or a substituent represented by any of a general formula (22), (23) or (24).

R₂ denotes a hydrogen atom, an alkyl group, an alkenyl group or an aryl group, each of which may have a substituent.

X₇ denotes -NH- or -O-, and X₈ and X₉ each independently denote -NH-, -O-, -CONH-, -SO₂NH-, -CH₂NH- or -CH₂NHCOCH₂NH-.

Y denotes an alkylene group, an alkenylene group or an arylene group which have a carbon number of 1 to 20, and each of them may have a substituent.

R₁₀ and R₁₁ each independently denote an organic coloring matter residue, a heterocyclic residue optionally having a substituent, an aromatic ring residue optionally having a substituent.

Examples of the organic coloring matter residue represented by R₁ of the general formula (21) and R₁₀ and R₁₁ of the general formula (25) include diketopyrrolopyrrole coloring matter; azo coloring matter such as azo, disazo and polyazo; phthalocyanine coloring matter; anthraquinone coloring matter such as diaminodianthraquinone, anthrapyrimidine, flavanthrone, anthoanthrone, indanthrone, pyranthrone and violanthrone; quinacridon coloring matter; dioxazine coloring matter; perinone coloring matter; perylene coloring matter; thioindigo coloring matter; isoindolin coloring matter; isoindolinone coloring matter; quinophthalone coloring matter; threne coloring matter; and metal complex coloring matter. Above all, the organic coloring matter residue except metal complex coloring matter is preferably used for improving the effect of restraining a battery from short-circuiting due to metal.

Examples of the heterocyclic residue and the aromatic ring residue represented by R₁ of the general formula (21) and R₁₀ and R₁₁ of the general formula (25) include thiophene, furan, pyridine, pyrazine, triazine, pyrazole, pyrrole, imidazole, isoindolinone, isoindolinone, benzimidazolone, benzthiazole, benztriazole, indole, quinoline, carbazole, acridine, benzene, naphthalin, anthracene, fluorene, phenanthrene, anthraquinone and acridone. These heterocyclic residue and aromatic ring residue may have a substituent such as an alkyl group (such as a methyl group, an ethyl group and a butyl group), an amino group, an alkylamino group (such as a dimethylamino group, a diethylamino group and a dibutylamino group), a nitro group, a hydroxyl group, an alkoxy group (such as a methoxy group, an ethoxy group and a butoxy group), halogen (such as chlorine, bromine and fluorine), a phenyl group (which may be substituted with an alkyl group, an amino group, an alkylamino group, a nitro group, a hydroxyl group, an alkoxy group, halogen and the like), and a phenylamino group (which may be substituted with an alkyl group, an amino group, an alkylamino group, a nitro group, a hydroxyl group, an alkoxy group, halogen and the like).

Y of the general formula (21) and the general formula (25) denotes an alkylene group, an alkenylene group or an arylene group which have a carbon number of 20 or less, each of which may have a substituent. Preferable specific examples thereof include a phenylene group, a biphenylene group or a naphthylene group, each of which may be substituted, or an alkylene group optionally having a side chain with a carbon number of 10 or less.

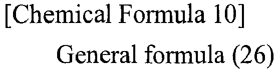

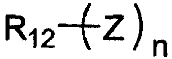

In the formula, Z is at least one selected from the group represented by the following general formula (27), (28) or (29). n denotes an integer of 1 to 4.

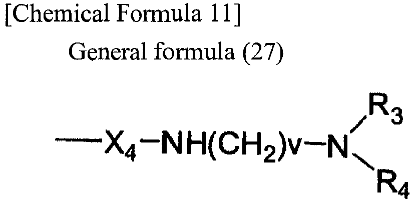

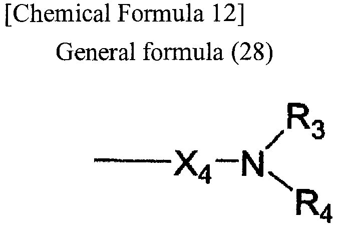

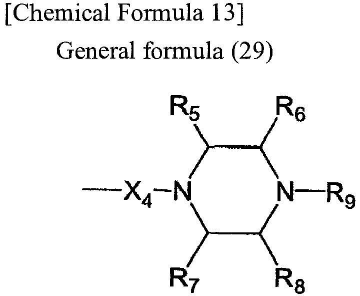

In the formulae (27) to (29),

X₄ denotes direct coupling, -SO₂-, -CO-, -CH₂NHCOCH₂-, -CH₂NHCONHCH₂-, -CH₂- or -X₅-Y-X₆-. X₅ denotes -NH- or -O-, and X₆ denotes direct coupling, -SO₂-, -CO-, -CH₂NHCOCH₂-, -CH₂NHCONHCH₂- or -CH₂-. Y denotes an alkylene group, an alkenylene group or an arylene group which have a carbon number of 1 to 20, and each of them may have a substituent.

v denotes an integer of 1 to 10.

R₃ and R₄ each independently denote a hydrogen atom, an alkyl group, an alkenyl group or a phenyl group, each of which may be substituted. Alternatively, R₃ and R₄ denote a heterocyclic residue optionally substituted, integrally containing nitrogen, oxygen or sulfur atom further. Above all, it is preferable that a hydrogen atom is conceived to offer a high effect of restraining metal from precipitating in a battery.

R₅, R₆, R₇ and R₈ each independently denote a hydrogen atom, an alkyl group optionally substituted, an alkenyl group optionally substituted or an aryl group optionally substituted.

R₉ denotes an alkyl group, an alkenyl group or an aryl group, each of which may be substituted.

R₁₂ denotes an organic coloring matter residue, a heterocyclic residue optionally having a substituent, or an aromatic ring residue optionally having a substituent.

Examples of the organic coloring matter residue represented by R₁₂ include diketopyrrolopyrrole coloring matter; azo coloring matter such as azo, disazo and polyazo; phthalocyanine coloring matter; anthraquinone coloring matter such as diaminodianthraquinone, anthrapyrimidine, flavanthrone, anthoanthrone, indanthrone, pyranthrone and violanthrone; quinacridon coloring matter; dioxazine coloring matter; perinone coloring matter; perylene coloring matter; thioindigo coloring matter; isoindolin coloring matter; isoindolinone coloring matter; quinophthalone coloring matter; threne coloring matter; and metal complex coloring matter. Above all, the organic coloring matter residue except metal complex coloring matter is preferably used for improving the effect of restraining a battery from short-circuiting due to metal.

Further, examples of the heterocyclic residue and the aromatic ring residue represented by R₁₂ include thiophene, furan, pyridine, pyrazole, pyrrole, imidazole, isoindolinone, isoindolinone, benzimidazolone, benzthiazole, benztriazole, indole, quinoline, carbazole, acridine, benzene, naphthalin, anthracene, fluorene, phenanthrene, anthraquinone and acridone. These heterocyclic residue and aromatic ring residue may have a substituent such as an alkyl group (such as a methyl group, an ethyl group and a butyl group), an amino group, an alkylamino group (such as a dimethylamino group, a diethylamino group and a dibutylamino group), a nitro group, a hydroxyl group, an alkoxy group (such as a methoxy group, an ethoxy group and a butoxy group), halogen (such as chlorine, bromine and fluorine), a phenyl group (which may be substituted with an alkyl group, an amino group, an alkylamino group, a nitro group, a hydroxyl group, an alkoxy group, halogen and the like), and a phenylamino group (which may be substituted with an alkyl group, an amino group, an alkylamino group, a nitro group, a hydroxyl group, an alkoxy group, halogen and the like).

In an embodiment of the composition of the present invention, the content of the dispersant is preferably within a range of 0.05 to 10% by weight, more preferably within a range of 0.1 to 5% by weight on the basis of the total weight of the first active material and the second active material.

### <Binder>

A binder in the composition of the present invention is used for binding other particles such as the after-mentioned conductive particulate carbon material and active material. Typically, the effect of dispersing the particles into a solvent by the binder is small. The binder is not particularly limited but well-known various resins in the technical field may be used. Examples thereof include acrylic resin, polyurethane resin, polyester resin, phenolic resin, epoxy resin, phenoxy resin, urea resin, melamine resin, alkyd resin, formaldehyde resin, silicon resin, fluororesin, and cellulosic resin such as carboxymethylcellulose. Other examples thereof include synthetic rubber such as styrene-butadiene rubber and fluororubber, conductive resin such as polyaniline and polyacethylene, and polymeric compound containing a fluorine atom, such as polyvinylidene fluoride, polyvinyl fluoride and tetrafluoroethylene. Further, the binder may be a denatured substance, a mixture or a copolymer of the resins. The binder may be used by one type or by mixture of plural types.

### <Solvent>

A solvent in the composition of the present invention is described. The solvent usable in the present invention is not particularly limited. Examples thereof include amides such as dimethylformamide, dimethylacetamide and methylformamide; amines such as N-methyl-2-pyrrolidone (NMP) and dimethylamine; ketones such as methyl ethyl ketone, acetone and cyclohexanone; alcohols; glycols; cellosolves; aminoalcohols; sulfoxides; carboxylates; phosphates; ethers; nitriles; and water.

The composition of the present invention includes various embodiments composed of various types of components described above. Although not particularly limited, a preferable embodiment of the composition of the present invention contains first and second active materials, at least one type selected from organic coloring matter derivative, anthraquinone derivative, acridone derivative and triazine derivative as a dispersant, polyvinylidene fluoride as a binder, and NMP as a solvent. Further, another preferable embodiment of the composition of the present invention contains first and second active materials, a resin dispersant as a dispersant, at least one type selected from the group consisting of acrylic resin, cellulosic resin, styrene-butadiene rubber and polytetrafluorethylene as a binder, and water as a solvent.

### <Conductive particulate carbon material>

As a preferable embodiment of the composition of the present invention, the composition may further contain a conductive particulate carbon material in addition to the components. The conductive particulate carbon material functions as a conductive assistant (occasionally abbreviated as a conductive assistant hereinafter). The conductive particulate carbon material in the present invention is not particularly limited if it is a carbon material having electrical conductivity. For example, graphite, carbon black, conductive carbon fiber (carbon nanotube, carbon nanofiber and carbon fiber), and fullerene may be used singly or together by two types or more. Carbon black is preferable in view of electrical conductivity, availability and costs.

Examples of carbon black usable in the present invention include furnace black which may be produced by continuously pyrolyzing a gaseous or liquid raw material in a reactor. Specific examples thereof include Ketjen black whose raw material is ethylene heavy oil; and channel black quenched and precipitated by burning raw material gas to apply the flame on the channel steel bottom face. Further, examples thereof include thermal black obtained by periodically repeating burning and pyrolysis while using gas as a raw material, and acetylene black whose raw material is acetylene gas particularly. In the present invention, various types of compounds may be used singly or together by two types or more. Further, carbon black subject to oxidation treatment typically performed and hollow carbon may be used.

The oxidation treatment of carbon is performed in such a manner that carbon is subject to high-temperature treatment in the air, or secondarily treated with nitric acid, nitrogen dioxide and ozone. The treatment is performed in such a manner that an oxygen-containing polar functional group such as a phenol group, a quinone group, a carboxyl group and a carbonyl group is directly introduced (covalently bonded) to a carbon surface. Such treatment is generally performed for improving dispersibility of carbon. However, generally, larger introduced amount of the functional group brings a tendency to further deteriorate electrical conductivity of carbon. Thus, carbon not subject to oxidation treatment is preferably used.

With regard to the specific surface area of carbon black, a larger value thereof brings more contact points of carbon black particles, so as to be advantageous to decrease internal resistance of an electrode. Thus, in an embodiment of the present invention, it is desirable to use carbon black which have 20 m²/g or more to 1500 m²/g or less, preferably 50 m²/g or more to 1500 m²/g or less, more preferably 100 m²/g or more to 1500 m²/g or less in specific surface area (BET) obtained from the adsorbed amount of nitrogen. The use of carbon black with a specific surface area of 20 m²/g or more allows sufficient electrical conductivity to be easily obtained. On the other hand, carbon black with a specific surface area of more than 1500 m²/g is occasionally made available as a commercial material with difficulty.

Further, with regard to the particle diameter of carbon black to be used, average primary particle diameter is preferably within a range of 0.005 to 1 µm, particularly preferably within a range of 0.01 to 0.2 µm. However, the average primary particle diameter herein signifies a value obtained in the same manner as a measuring method for the active material particle.

The conductive particulate carbon material is desirably refined so that a dispersed particle diameter in a composition for forming an electrode of a lithium secondary battery is 0.03 µm or more to 5 µm or less, preferably 2 µm or less. The composition in which the dispersed particle diameter of the carbon material as a conductive assistant is less than 0.03 µm is occasionally produced with difficulty. Further, in the case of using the composition in which the dispersed particle diameter of the carbon material as a conductive assistant is 2 µm or less, it is easy to restrain troubles from being caused such as a variation in material distribution of a mixture coating film and a variation in resistance distribution of an electrode.

The dispersed particle diameter herein signifies a particle diameter (D50) such that the volume fraction of the particle integrated in increasing order of the particle diameter in volume particle size distribution becomes 50%. The dispersed particle diameter may be measured by using a general granulometer such as a granulometer of a dynamic light scattering system ("Microtrac UPA", manufactured by NIKKISO CO., LTD.).

Examples of commercially available carbon black include TOKABLACK #4300, #4400, #4500 and #5500 (furnace black, manufactured by TOKAI CARBON CO., LTD.); PRINTEX L (furnace black, manufactured by Evonik Degussa Japan Co., Ltd.); and Raven 7000, 5750, 5250, 5000ULTRAIII, 5000ULTRA, Conductex SC ULTRA, Conductex 975 ULTRA, PUER BLACK 100, 115 and 205 (furnace black, manufactured by Columbian Chemicals). Further, examples thereof include #2350, #2400B, #2600B, #30050B, #3030B, #3230B, #3350B, #3400B and #5400 (furnace black, manufactured by Mitsubishi Chemical Corporation); MONARCH 1400, 1300, 900, Vulcan XC-72R and Black Pearls 2000 (furnace black, manufactured by Cabot Corp.); Ensaco 250G, Ensaco 260G, Ensaco 350G and Super P-Li (manufactured by TIMCAL); Ketjen black EC-300J and EC-600JD (manufactured by KAYAKU AKZO CO., LTD.); and DENKA BLACK, DENKA BLACK HS-100 and FX-35 (acetylene black, manufactured by DENKI KAGAKU KOGYO KABUSHIKI KAISHA). Further, specific examples of graphite usable in the present invention include artificial graphite, and natural graphite such as flake graphite, massive graphite and earthy graphite. However, graphite is not limited thereto but may be used by mixture of two types or more.

The conductive carbon fiber may be obtained by burning a raw material derived from petroleum, or obtained by burning a raw material derived from plants. Examples of commercially available goods include "VGCF" manufactured by Showa Denko K.K., which is produced from a raw material derived from petroleum.

### <Additive>

In an embodiment of the present invention, a composition for forming an electrode of a lithium secondary battery may further contain various types of additives such as a film-forming assistant, an antifoaming agent, a leveling agent, an antiseptic agent, a pH adjustor and a viscosity adjustor in addition to the components as required. In a preferable embodiment of the composition of the present invention, the composition contains a thickening agent such as a cellulose type. The cellulosic thickening agent is not particularly limited but examples thereof include carboxymethyl cellulose (CMC), carboxyethyl cellulose, hydroxyethyl cellulose (HEC), hydroxypropyl cellulose (HPC), ethylhydroxyethyl cellulose (EHEC), hydroxymethylethyl cellulose, hydroxyhydroxypropylmethyl cellulose, methyl cellulose (MC) and hydroxyalkylmethyl cellulose.

The composition of the present invention may be appropriately used as a material for forming an electrode of a lithium secondary battery. More specifically, the electrode has a current collector and a mixture layer formed on the surface of the current collector; in an embodiment of the present invention, the mixture layer may be formed by coating and drying the composition on the surface of the current collector. That is to say, the composition for forming an electrode of a lithium secondary battery of the present invention may be prepared as mixture ink.

In the case of preparing the composition of the present invention as the mixture ink for forming the mixture layer, each component is preferably combined so that the solid content is within a range of 30 to 90% by weight, depending on a coating method. In particular, in order to obtain excellent electrode characteristics, the content of the active material is preferably increased as much as possible in a coatable viscosity range. For example, the ratio of the active material occupied in the solid content of the composition (hereinafter referred to also as mixture ink) is preferably 80% by weight or more and 99% by weight or less. Incidentally, in the case of describing "active material" hereinafter in the present invention, the active material signifies a combination of the first active material particle and the second active material particle. Further, the viscosity of the mixture ink is preferably adjusted to 100 mPa·s or more and 30,000 mPa·s or less. Further, the ratio of the dispersant occupied in the solid content of the mixture ink is preferably within a range of 0.1 to 15% by weight. Further, in the case of using a conductive assistant as a component of the mixture ink, the ratio of the conductive assistant occupied in the solid content of the mixture ink is preferably within a range of 0.1 to 15% by weight. In addition, in the case where the mixture ink contains a binder, the ratio of the binder occupied in the solid content of the mixture ink is preferably within a range of 0.1 to 15% by weight.

The mixture ink may be obtained by various methods. For example, in the case of preparing the mixture ink containing an active material, a conductive assistant, a dispersant, a binder and a solvent, the following methods may be applied.
(1) An active material dispersing element containing an active material, a dispersant and a solvent is prepared, and subsequently a conductive assistant and a binder are added to the dispersing element to thereby allow mixture ink. The conductive assistant and the binder may be added simultaneously, or the binder may be added after adding the conductive assistant and vice versa.
(2) A conductive assistant dispersing element containing a conductive assistant, a dispersant and a solvent is prepared, and subsequently an active material and a binder are added to the dispersing element to thereby allow mixture ink. The active material and the binder may be added simultaneously, or the binder may be added after adding the active material and vice versa.
(3) An active material dispersing element containing an active material, a dispersant, a binder and a solvent is prepared, and subsequently a conductive assistant is added to the dispersing element to thereby allow mixture ink.
(4) A conductive assistant dispersing element containing a conductive assistant, a dispersant, a binder and a solvent is prepared, and subsequently an active material is added to the dispersing element to thereby allow mixture ink.
(5) An active material, a conductive assistant, a dispersant, a binder and a solvent are mixed nearly simultaneously to thereby allow mixture ink.

An apparatus used for preparing the mixture ink may be a disperser or a mixer to be typically used for pigment dispersion. Examples thereof include mixers such as disper, homomixer or planetary mixer; homogenizers such as "CLEARMIX" manufactured by M Technique Co., Ltd. or "FILMIX" manufactured by PRIMIX Corporation; media dispersers such as paint conditioner (manufactured by Red Devil), ball mill, sand mill ("DYNO-MILL" manufactured by SHINMARU ENTERPRISES CORPORATION), attritor, pearl mill ("DCP MILL" manufactured by Nippon Eirich Co., Ltd.) or CoBall Mill; medialess dispersers such as wet jet mill ("Genus PY" manufactured by Genus, Inc., "Star Burst" manufactured by Sugino Machine Limited and "Nanomizer" manufactured by NANOMIZER Inc.), "CLEAR SS-5" manufactured by M Technique Co., Ltd. or "MICROS" manufactured by Nara Machinery Co., Ltd.; or roll mill. However, the apparatus is not limited thereto. Further, a disperser treated against metal mixing therefrom is preferably used as the disperser.

For example, in the case of using media dispersers, it is preferable to use a disperser such that an agitator and a vessel are made of ceramic or resin, and a disperser such that the surface of an agitator and a vessel made of metal is treated with tungsten carbide spraying and resin coating. Then, glass beads, zirconia beads, or ceramic beads such as alumina beads are preferably used as the media. Further, in the case of using roll mill, a roll made of ceramic is preferably used. A dispersing device may be used by only one type, or plural types of devices may be used in combination. Further, in the case of cathode or anode active materials in which a particle is easily cracked or broken by a strong shock, medialess dispersers such as roll mill and homogenizers are more preferable than media dispersers.

### <II> An electrode for a lithium secondary battery

A second embodiment of the present invention relates to an electrode of a lithium secondary battery. The electrode has a current collector and a mixture layer formed on a surface of the current collector, characterized in that the mixture layer is a dry coating film formed by using the composition of the first embodiment of the present invention. According to the present invention, the mixture layer such that an active material is highly filled without a crack even in the case of forming a thick coating film may be formed by coating and drying the composition on the surface of the current collector.

The current collector usable in the present invention is described. The material and shape of the current collector used for the present invention are not particularly limited but a current collector adaptable to various types of secondary batteries may be properly selected. Examples of the material for the current collector include metals and alloys such as aluminum, copper, nickel, titanium or stainless steel. In the case of a lithium ion battery, aluminum is particularly preferable as a cathode material. Further, copper is preferable as an anode material. Further, a plate-like metallic foil is generally used as the shape of the current collector. However, any of a metallic foil with the surface roughened, a porous metallic foil and a mesh metallic foil may be used as the current collector.

A method for coating mixture ink on the current collector is not particularly limited but a publicly known method may be used. Specific examples thereof include a die coating method, a dip coating method, a roll coating method, a doctor coating method, a knife coating method, a spray coating method, a gravure coating method, a screen printing method or an electrostatic painting method. Examples of a usable drying method include standing drying, a circulation drier, a warm-air drier, an infrared heater and a far-infrared heater, and the drying method is not particularly limited thereto. Further, rolling treatment by planar press and calender roll may be performed after coating.

The film thickness of the dry coating film in the present invention is described. In the present invention, the film thickness of the dry coating film signifies the thickness of the coating film after coating and drying mixture ink on the current collector in accordance with the method, that is, the thickness of the mixture layer. Generally, the thickness of the mixture layer is 1 µm or more and 500 µm or less, preferably 10 µm or more, more preferably 90 µm or more and 300 µm or less. The film thickness may be measured by using an apparatus of Digimicro Series manufactured by NIKON INSTECH CO., LTD., for example.

Generally, it is very difficult technically to thicken the film thickness of the mixture layer and maintain battery performance. When the film thickness of the mixture layer is thickened, an active material particle distant from the current collector exists and high conductivity is demanded in the whole mixture layer. Further, when the film thickness is thickened, a crack is caused so easily that flexibility is demanded in the whole mixture layer. On the contrary, the composition for forming an electrode of a lithium secondary battery of the present invention allows the mixture layer satisfying these demands to be provided. The present invention allows battery performance to be favorably maintained even in the case of thickening the dry coating film composing the mixture layer up to 90 µm or more.

### <III> A lithium secondary battery

A third embodiment of the present invention relates to a lithium secondary battery having a cathode, an anode and a liquid electrolyte, and is characterized in that the cathode includes the electrode of the second embodiment of the present invention. That is to say, in an embodiment of the present invention, the composition of the present invention is preferably used for forming the mixture layer of the cathode.

The lithium secondary battery of the present invention is described. The structure of the lithium secondary battery using the composition of the present invention is not particularly limited. Typically, the lithium secondary battery may include a cathode, an anode, a separator provided as required, and a liquid electrolyte. The shape of the battery may adopt various shapes in accordance with purposes for use, such as a paper type, a cylindrical type, a button type and a lamination type.

The case of the lithium ion secondary battery is described by way of example. A solution such that an electrolyte containing lithium is dissolved in a nonaqueous solvent is used as the liquid electrolyte. Examples of the electrolyte include LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C LiI, LiBr, LiCl, LiAlCl, LiHF₂, LiSCN or LiBPh₄, and are not limited thereto.

The nonaqueous solvent is not particularly limited. Examples thereof include carbonates such as ethylene carbonate, propylene carbonate, butylene carbonate, dimethyl carbonate, ethylmethyl carbonate and diethyl carbonate; lactones such as γ-butyrolactone, γ-valerolactone and γ-octanoiclactone; glymes such as tetrahydrofuran, 2-methyltetrahydrofuran, 1,3-dioxolane, 4-methyl-1,3-dioxolane, 1,2-methoxyethane, 1,2-ethoxyethane and 1,2-dibutoxyethane; esters such as methyl formate, methyl acetate and methyl propionate; sulfoxides such as dimethyl sulfoxide and sulfolane; and nitriles such as acetonitrile. Further, these solvents may be used each singly or by mixture of two types or more.

The liquid electrolyte may be further made into a gel polyelectrolyte retained by a polymer matrix. Examples of the polymer matrix include acrylate resin having a polyalkylene oxide segment, polyphosphazene resin having a polyalkylene oxide segment and polysiloxane resin having a polyalkylene oxide segment, and are not limited thereto.

Examples of the separator include a polyethylene nonwoven fabric, a polypropylene nonwoven fabric, a polyamide nonwoven fabric and ones subject to hydrophilic treatment, and are not particularly limited thereto.

### Examples

The present invention is hereinafter described more specifically by examples. However, the scope of rights of the present invention is not limited to the following embodiments but it is needless to say that the scope may be variously modified unless it deviates from the gist of the present invention. Incidentally, all of "part" described hereinafter signifies "part by weight".

### <Synthesis of dispersant>

A dispersant used in examples and comparative examples was prepared in the following manner.

### (Synthesis Example 1) Dispersant (1)

200.0 parts of n-butanol was charged into a reaction vessel provided with a gas inlet tube, a thermometer, a condenser and a stirrer, and substituted with nitrogen gas. The reaction vessel was heated to a temperature of 110°C, and subsequently a mixture of 100.0 parts of styrene, 60.0 parts of acrylic acid, 40.0 parts of dimethylaminoethyl methacrylate and 12.0 parts of V-601 (manufactured by Wako Pure Chemical Industries, Ltd.) was dropped thereinto over two hours to perform a polymerization reaction. After finishing dropping, the reaction was further performed at a temperature of 110°C for three hours to thereafter add 0.6 part of V-601 (manufactured by Wako Pure Chemical Industries, Ltd.) thereto. After the addition, the reaction was further continued at a temperature of 110°C for one hour to obtain a solution of a copolymer (1). An acid value of the copolymer (1) was 219.1 (mgKOH/g). Further, a weight-average molecular weight (Mw) of the copolymer (1) was 6800. The molecular weight was measured in such a manner that a dried sample was dissolved in THF to use HLC-8320GPC (manufactured by Tosoh Corp.) as a device. The used column was G-2000 and the eluant was THF. The molecular weight is a value obtained by converting the measured value into polystyrene.

The obtained solution of the copolymer (1) was cooled up to room temperature to thereafter add 74.2 parts of dimethylaminoethanol to the solution, which was neutralized. The added amount of the methylaminoethanol acrylic acid corresponds to an amount for achieving the neutralization by 100%. In addition, 400 parts of water was added to the solution after being neutralized, which solution was made into an aqueous solution and thereafter heated up to a temperature of 100°C, and butanol was azeotroped with water to distill off butanol. The obtained residue was diluted with water to thereby obtain an aqueous solution of a dispersant (1) with a nonvolatile content of 20% as an aqueous dispersing element.

### (Synthesis Examples 2 to 21) Dispersants (2) to (21)

Each dispersant was obtained by using each component in formulated composition shown in Table 1 in accordance with the same method as Synthesis Example 1. The obtained dispersants were regarded as Dispersants (2) to (21), corresponding to each of

### Synthesis Examples 2 to 21.

[Table 1] Table 1

**Table 1: Dispersants**

| Synthesis Examples (Dispersants No.) | monomers (a-1) | | monomers (a-2) | | monomers (a-3) | monomers (a-4) | | Mw | neutralizers | neutralization ratio | initiator amount (Wt%) | types of Dispersants |
|---|---|---|---|---|---|---|---|---|---|---|---|---|
| | St | BzMA | AA | MAA | DM | BMA | HEMA | | | | | |
| 1 | 50 | | 30 | | 20 | | | 6800 | DMAE | 100% | 6% | amphoteric |
| 2 | 50 | | 30 | | 20 | | | 6800 | ammonia | 100% | 6% | |
| 3 | 65 | | 30 | | 5 | | | 13000 | DMAE | 100% | 6% | |
| 4 | 20 | | 40 | | 20 | 20 | | 14300 | DMAE | 100% | 6% | |
| 5 | 50 | | | 30 | 20 | | | 9300 | DMAE | 100% | 6% | |
| 6 | | 50 | 30 | | 20 | | | 9800 | DMAE | 100% | 2% | |
| 7 | 50 | | 40 | | | 10 | | 10200 | DMAE | 100% | 6% | anionic |
| 8 | 70 | | 30 | | | | | 18200 | DMAE | 100% | 6% | |
| 9 | 30 | | 70 | | | | | 8900 | NaOH | 100% | 6% | |
| 10 | 20 | | | | 60 | 20 | | 15500 | acetic acid | 100% | 4% | cationic |
| 11 | | | | | 50 | | 50 | 11800 | acetic acid | 100% | 6% | |
| 12 | 20 | | | | 80 | | | 16300 | acetic acid | 100% | 6% | |
| 13 | 30 | | | | 40 | 30 | | 14800 | acetic acid | 100% | 6% | |
| 14 | 75 | | 20 | | 5 | | | 17400 | DMAE | 100% | 6% | amphoteric |
| 15 | 2 | | 20 | | 60 | 18 | | 8800 | DMAE | 100% | 6% | |
| 16 | 30 | | 15 | | 5 | 50 | | 12100 | DMAE | 100% | 3% | |
| 17 | | | 75 | | | 25 | | 18000 | DMAE | 100% | 6% | anionic |
| 18 | | | 100 | | | | | 14900 | NaOH | 100% | 6% | |
| 19 | 60 | | 10 | | | 30 | | 12000 | DMAE | 100% | 6% | |
| 20 | 50 | | | | 50 | | | 18700 | acetic acid | 100% | 6% | cationic |
| 21 | | | | | 100 | | | 15000 | acetic acid | 100% | 3% | |

The details of the abbreviation described in Table 1 are as follows.
St: styrene
BzMA: benzyl methacrylate
AA: acrylic acid
MAA: methacrylic acid
DM: dimethylaminoethyl methacrylate
BMA: butyl methacrylate
HEMA: hydroxyethyl methacrylate
DMAE: dimethylaminoethanol
(*): All of the used initiators are "V-601" manufactured by Wako Pure Chemical Industries, Ltd. The amount of the initiators described in Table 1 is % by weight on the basis of the total weight of monomers.

Dispersants (22) to (25) used in examples and comparative examples are as follows.

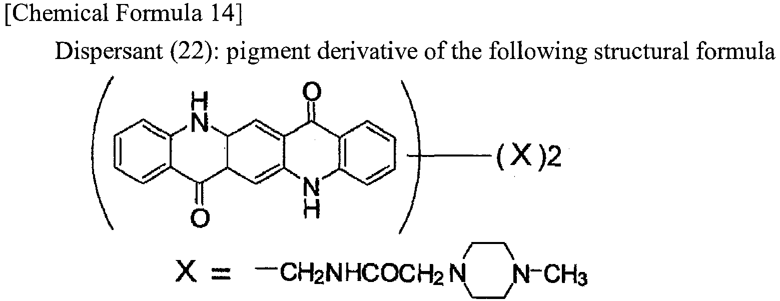

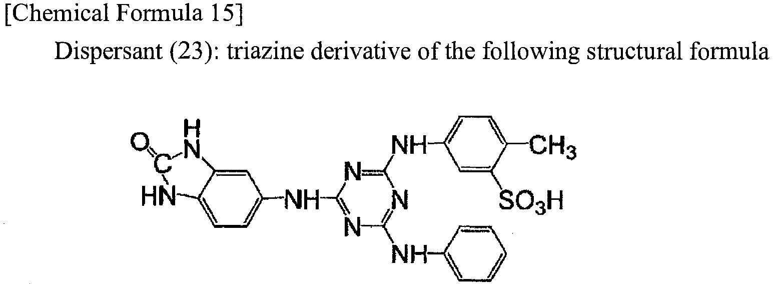

Dispersant (24): Commercially available dispersant ("EPOMIN P-1000" manufactured by Nippon Shokubai Co., Ltd.). Polyethylene-imine compound, weight-average molecular weight: approximately 70000, amine value: 1008 mgKOH/g. Their values are a description on the basis of the catalogue.

Dispersant (25): Commercially available dispersant ("GOHSENOL NL-05" manufactured by Nippon Synthetic Chemical Industry Co., Ltd.). Polyvinyl alcohol compound, saponification degree: 98.5 mol%, weight-average molecular weight: approximately 22000. Their values are a description on the basis of the catalogue.

### <Preparation of active material>

An active material used in examples and comparative examples was prepared in the following manner. Incidentally, in the description hereinafter, "average primary particle diameter" signifies an average particle diameter of coated primary particles unless otherwise mentioned.

### (Preparation Example 1) Production of first active material particle (1)

A polyethylene glycol aqueous solution of 1% by weight was added to dry powder of LiFePO₄ synthesized by a hydrothermal treatment method, and subsequently they were mixed and dried in a vacuum at a temperature of 70°C to thereby obtain a product. The added amount of the polyethylene glycol aqueous solution was adjusted so that the carbon amount after burning was 2% by weight. The product was cracked with a mortar and thereafter heated under a nitrogen atmosphere at a temperature of 700°C for 5 hours. The product after being cracked was cooled up to room temperature, and thereafter an aggregate was removed by using a screen to obtain LiFePO₄ particulates in which the surface layer of primary particles was coated with a conductive carbon layer by carbonization of a carbon precursor. The average primary particle diameter of the particulates was 200 nm and the average secondary particle diameter was 2 µm.

### (Preparation Example 2) Production of second active material particle (1)

The first active material particles (1) obtained in the Preparation Example 1 were measured so as to be a solid content of 15 wt% with respect to distilled water, and these were premixed by a disper to thereby obtain a mixture. Subsequently, the mixture was subjected to dispersal treatment at a residence time of 10 minutes by using an ultrasonic disperser GSD300RCVP manufactured by Ginsen. Co., Ltd. to thereby obtain slurry in which the first active material particles (1) were dispersed into water. Subsequently, the slurry was spray-dried at a temperature of 125°C by using a minispray dryer B-290 manufactured by Nihon BUCHI K.K. to thereby obtain granulated particles of the LiFePO₄ particulates. The granulated particles were formed from the primary particles with an average primary particle diameter of 200 nm and the average secondary particle diameter was 15 µm.

### (Preparation Example 3) Production of second active material particle (2)

A sucrose aqueous solution of 5% by weight was added to dry powder of LiFePO₄ synthesized by a hydrothermal treatment method, and further diluted with water until a solid content of 20% by weight to obtain a solution. The solution was subjected to dispersal treatment over 5 hours by ball mill while using zirconia ball with a diameter of 1.25 mm to obtain slurry. The added amount of the sucrose aqueous solution was adjusted so that the carbon amount after burning was 5% by weight. Subsequently, the slurry was spray-dried at a temperature of 125°C by using a minispray dryer B-290 manufactured by Nihon BUCHI K.K. to obtain powder. Thereafter, the obtained powder was heated under a nitrogen atmosphere at a temperature of 700°C for 5 hours to thereby obtain granulated particles of LiFePO₄ particulates in which the surface layer of primary particles was coated with a conductive carbon layer. The granulated particles were formed from the primary particles with an average primary particle diameter of 200 nm and the average secondary particle diameter was 50 µm.

### (Preparation Example 4) Production of first active material particle (2)

The second active material particles (2) obtained in the Preparation Example 3 were subject to grinding treatment for 5 hours by dry ball mill while using zirconia ball with a diameter of 0.5 mm. With regard to LiFePO₄ particulates thus obtained, the average primary particle diameter was 200 nm and the average secondary particle diameter was 2 µm.

### (Preparation Example 5) Production of first active material particle (3)

Li source, P source, Fe source and C source were each ground and mixed by dry ball mill, and subsequently heated under a nitrogen atmosphere at a temperature of 700°C for 8 hours to thereby obtain a product. The obtained product was cooled up to room temperature, and thereafter an aggregate was removed by using a screen to obtain LiFePO₄ particulates in which the surface layer of primary particles was coated with a conductive carbon layer. The average primary particle diameter of the obtained particulates was 90 nm and the average secondary particle diameter was 1 µm.

### (Preparation Example 6) Production of second active material particle (3)

The first active material particles (3) obtained in the Preparation Example 5 were measured so as to be a solid content of 15 wt% with respect to distilled water, to which a dispersant was further added and these were premixed by a disper to thereby obtain a mixture. The dispersant was BYK-190 manufactured by BYK Japan KK, and used by an amount of 2% by weight (a solid content) with respect to the first active material (3). Subsequently, the mixture was subjected to dispersal treatment at a residence time of 10 minutes by using an ultrasonic disperser GSD300RCVP manufactured by Ginsen. Co., Ltd. to thereby obtain slurry in which the first active material particles (3) were dispersed into water. Subsequently, the slurry was spray-dried at a temperature of 125°C by using a minispray dryer B-290 manufactured by Nihon BUCHI K.K. to thereby obtain granulated particles of the LiFePO₄ particulates. Thereafter, the granulated particles were heated under a nitrogen atmosphere at a temperature of 700°C for 5 hours. The granulated particles obtained as described above were formed from the primary particles with an average primary particle diameter of 90 nm and the average secondary particle diameter was 20 µm.

### (Preparation Example 7) Production of first active material particle (4)

Li source, P source, Fe source and C source were each ground and mixed by dry ball mill, and subsequently heated under a nitrogen atmosphere at a temperature of 700°C for 8 hours to thereby obtain a product. The obtained product was cooled up to room temperature, and thereafter an aggregate was removed by using a screen to obtain LiFePO₄ particulates in which the surface layer of primary particles was coated with a conductive carbon layer. The average primary particle diameter of the obtained particulates was 300 nm and the average secondary particle diameter was 10 µm.

### (Preparation Example 8) Production of first active material particle (5)

Li source, P source, Fe source and C source were each ground and mixed by dry ball mill, and subsequently heated under a nitrogen atmosphere at a temperature of 700°C for 8 hours to thereby obtain a product. The obtained product was cooled up to room temperature, and thereafter an aggregate was removed by using a screen to obtain LiFePO₄ particulates in which the surface layer of primary particles was coated with a conductive carbon layer. The average primary particle diameter of the obtained particulates was 90 nm and the average secondary particle diameter was 400 µm.

### (Preparation Example 9) Production of first active material particle (6)

A polyethylene glycol aqueous solution of 1 % by weight was added to dry powder of LiFePO₄ synthesized by a hydrothermal treatment method, and they were mixed and subsequently dried in a vacuum at a temperature of 70°C to thereby obtain a product. The added amount of the polyethylene glycol aqueous solution was adjusted so that the carbon amount after burning was 2% by weight. The product was cracked with a mortar and thereafter heated under a nitrogen atmosphere at a temperature of 700°C for 5 hours. The product after being cracked was cooled up to room temperature, and thereafter an aggregate was removed by using a screen to obtain LiFePO₄ particulates in which the surface layer of primary particles was coated with a conductive carbon layer by carbonization of a carbon precursor. The average primary particle diameter of the particulates was 500 nm and the average secondary particle diameter was 5 µm.

### (Preparation Example 10) Production of second active material particle (4)

The first active material particles (6) obtained in the Preparation Example 9 were measured so as to be a solid content of 15 wt% with respect to distilled water, and these were premixed by a disper to thereby obtain a mixture. Subsequently, the mixture was subjected to dispersal treatment at a residence time of 10 minutes by using an ultrasonic disperser GSD300RCVP manufactured by Ginsen. Co., Ltd. to thereby obtain slurry in which the first active material particles (6) were dispersed into water. Subsequently, the slurry was spray-dried at a temperature of 125°C by using a minispray dryer B-290 manufactured by Nihon BUCHI K.K. to thereby obtain granulated particles of the LiFePO₄ particulates. The granulated particles were formed from the primary particles with an average primary particle diameter of 500 nm and the average secondary particle diameter was 20 µm.

### (Preparation Example 11) Production of second active material particle (5)

A sucrose aqueous solution of 5% by weight was added to dry powder of LiFePO₄ synthesized by a hydrothermal treatment method, and further diluted with water until a solid content of 30% by weight to obtain a solution. The solution was subjected to dispersal treatment over 5 hours by ball mill while using zirconia ball with a diameter of 1.25 mm to obtain slurry. The added amount of the sucrose aqueous solution was adjusted so that the carbon amount after burning was 5% by weight. Subsequently, the slurry was spray-dried at a temperature of 125°C by using a minispray dryer B-290 manufactured by Nihon BUCHI K.K. to obtain powder. Thereafter, the obtained powder was heated under a nitrogen atmosphere at a temperature of 700°C for 5 hours to thereby obtain granulated particles of LiFePO₄ particulates in which the surface layer of primary particles was coated with a conductive carbon layer. The granulated particles were formed from the primary particles with an average primary particle diameter of 150 nm and the average secondary particle diameter was 5 µm.

### <Composition for electrode of lithium secondary battery, electrode and lithium secondary battery>

### (Example 1)

### 1. Preparation of composition for electrode of lithium secondary battery

5.6 parts of acetylene black (DENKA BLACK HS-100) as a conductive assistant, 10 parts of the dispersant (2 parts in terms of a solid content) obtained in Synthesis Example (1), and 85 parts of water were put in a mixer and mixed. 20 parts of the first active material particle (1), 80 parts of the second active material particle (1), and 6 parts of polytetrafluorethylene 30-J as a binder were added and mixed to the mixture to thereby prepare a composition for an electrode of a lithium secondary battery. Incidentally, in the composition, the first active material particle (1) is LiFePO₄ with an average primary particle diameter of 200 nm and an average secondary particle diameter of 2 µm. Further, the second active material particle (1) is granulated LiFePO₄ with an average primary particle diameter of 200 nm and an average secondary particle diameter of 15 µm. Further, dispersion tetrafluorethylene 30-J used as the binder is manufactured by Du Pont-Mitsui Fluorochemicals Company, Ltd. and 60%-aqueous dispersing element.

### 2. Production of electrode of lithium secondary battery

The composition for forming an electrode of a lithium secondary battery obtained as described above was coated on a current collector by using a doctor blade to form a coating film. The current collector was an aluminum foil with a thickness of 20 µm. Thereafter, the coating film was dried by heating under reduced pressure to form a mixture layer made of a dry coating film and thereby produce an electrode sample. The coated amount of the composition was adjusted so that the thickness of the mixture layer was 60 µm.

Each of the electrode samples such that the thickness of the mixture layer was 90 µm and 120 µm was produced in the same manner as the method except for modifying the coated amount of the composition for forming an electrode of a lithium secondary battery. In addition, each of the electrode samples was subjected to calendering by calender roll and adjusted so that the density of the mixture layer was 2.0 g/cc.

### 3. Production of lithium secondary battery

The electrode produced as described above was stamped out into a diameter of 16 mm and used as a working electrode to produce a coin-type battery. Specifically, the coin-type battery including the working electrode, a counter electrode of a metal lithium foil, a separator (a porous polypropylene film) inserted between the working electrode and counter electrode, and a liquid electrolyte was produced. A nonaqueous liquid electrolyte, such that LiPF₆ was dissolved with a concentration of 1M in a mixed solvent in which ethylene carbonate and diethyl carbonate were mixed at a ratio of 1 : 1 (volume ratio), was used as the liquid electrolyte. The coin-type battery was produced in a glove box substituted with argon gas.

### (Example 2)

### 1. Preparation of composition for electrode of lithium secondary battery

5.6 parts of acetylene black (DENKA BLACK HS-100) as a conductive assistant, 2.5 parts of the dispersant (0.5 part in terms of a solid content) obtained in Synthesis Example (2), and 85 parts of water were put in a mixer and mixed. 20 parts of the first active material particle (1), 80 parts of the second active material particle (1), and 6 parts of polytetrafluorethylene 30-J as a binder were added and mixed to the mixture to thereby prepare a composition for an electrode of a lithium secondary battery. Incidentally, in the composition, the first active material particle (1) is LiFePO₄ with an average primary particle diameter of 200 nm and an average secondary particle diameter of 2 µm. Further, the second active material particle (1) is granulated LiFePO₄ with an average primary particle diameter of 200 nm and an average secondary particle diameter of 15 µm. Further, polytetrafluorethylene 30-J used as the binder is manufactured by Du Pont-Mitsui Fluorochemicals Company, Ltd. and 60%-aqueous dispersing element. An electrode sample and a coin-type battery were produced in the same manner as Example 1 by using the composition obtained as described above.

### (Examples 3 to 45, Comparative Examples 1 to 10)

A composition for an electrode of a lithium secondary battery was prepared in all the same manner as Example 1 except for applying materials and conditions shown in Tables 2-1 to 2-3. Further, an electrode sample and a coin-type battery were produced in the same manner as Example 1 by using each of the prepared compositions.

[Table 2] Table 2-1

**Table 2-1: Examples 1 to 22**

| Examples | (A) first active materials | | | (B) second active materials | | | compounding ratio | dispersants | | thickening agents | conductive assistants | binders | solvents |
|---|---|---|---|---|---|---|---|---|---|---|---|---|---|
| | active materials No. | primary particle diameter | average particle diameter | active materials No. | primary particle diameter | average particle diameter | (A):(B) | dispersants No. | dispersant amount(*) | CMC^{(*)} | | | |
| 1 | (1) | 200nm | 2*µ*m | (1) | 200nm | 15*µ*m | 20:80 | 1 | 2wt% | | AB | 30-J | water |
| 2 | (1) | 200nm | 2*µ*m | (1) | 200nm | 15*µ*m | 20:80 | 2 | 0.5wt% | | | | water |
| 3 | (1) | 200nm | 2*µ*m | (1) | 200nm | 15*µ*m | 50:50 | 1 | 2wt% | | | | water |
| 4 | (1) | 200nm | 2*µ*m | (1) | 200nm | 15*µ*m | 50:50 | 1 | 1wt% | 1wt% | | | water |
| 5 | (1) | 200nm | 2*µ*m | (1) | 200nm | 15*µ*m | 50:50 | 2 | 2wt% | | | | water |
| 6 | (1) | 200nm | 2*µ*m | (1) | 200nm | 15*µ*m | 50:50 | 2 | 1wt% | 1wt% | | | water |
| 7 | (1) | 200nm | 2*µ*m | (1) | 200nm | 15*µ*m | 50:50 | 3 | 2wt% | | | | water |
| 8 | (1) | 200nm | 2*µ*m | (1) | 200nm | 15*µ*m | 50:50 | 4 | 2wet% | | | | water |
| 9 | (1) | 200nm | 2*µ*m | (1) | 200nm | 15*µ*m | 50:50 | 5 | 2wt% | | | | water |
| 10 | (1) | 200nm | 2*µ*m | (1) | 200nm | 15*µ*m | 50:50 | 6 | 2wt% | | | | water |
| 11 | (1) | 200nm | 2*µ*m | (1) | 200nm | 15*µ*m | 50:50 | 7 | 2wt% | | | | water |
| 12 | (1) | 200nm | 2*µ*m | (1) | 200nm | 15*µ*m | 50:50 | 8 | 2wt% | | | | water |
| 13 | (1) | 200nm, | 2*µ*m | (1) | 200nm | 15*µ*m | 50:50 | 9 | 2wt% | | | | water |
| 14 | (1) | 200nm | 2*µ*m | (1) | 200nm | 15*µ*m | 50:50 | 10 | 2wt% | | | | water |
| 15 | (1) | 200nm | 2*µ*m | (1) | 200nm | 15*µ*m | 50:50 | 11 | 2wt% | | | | water |
| 16 | (1) | 200nm | 2*µ*m | (1) | 200nm | 15*µ*m | 50:50 | 12 | 2wt% | | | | water |
| 17 | (1) | 200nm | 2*µ*m | (1) | 200nm | 15*µ*m | 50:50 | 13 | 2wt% | | | | water |
| 18 | (1) | 200nm | 2*µ*m | (1) | 200nm | 15*µ*m | 50:50 | 14 | 2wt% | | | | water |
| 19 | (1) | 200nm | 2*µ*m | (1) | 200nm | 15*µ*m | 50:50 | 15 | 2wt% | | | | water |
| 20 | (1) | 200nm | 2*µ*m | (1) | 200nm | 15*µ*m | 50:50 | 16 | 2wt% | | | | water |
| 21 | (1) | 200nm | 2*µ*m | (1) | 200nm | 15*µ*m | 50:50 | 17 | 2wt% | | | | water |
| 22 | (1) | 200nm | 2*µ*m | (1) | 200nm | 15*µ*m | 50:50 | 18 | 2wt% | | | | water |

[Table 3] Table 2-2

**Table 2-2: Examples 23 to 45**

| Examples | (A) first active materials | | | (B) second active materials | | | compounding ratio | dispersants | | thickening agents | conductive assistants | binders | solvents |
|---|---|---|---|---|---|---|---|---|---|---|---|---|---|
| | active materials No. | primary particle diameter | average particle diameter | active materials No. | primary particle diameter | average particle diameter | (A):(B) | dispersants No. | dispersant amount(*) | CMC^{(*)} | | | |
| 23 | (1) | 200nm | 2*µ*m | (1) | 200nm | 15*µ*m | 50:50 | 19 | 2wt% | | AB | 30-J | water |
| 24 | (1) | 200nm | 2*µ*m | (1) | 200nm | 15*µ*m | 50:50 | 20 | 2wt% | | | | water |
| 25 | (1) | 200nm | 2*µ*m | (1) | 200nm | 15*µ*m | 50:50 | 21 | 2wt% | | | | water |
| 26 | (1) | 200nm | 2*µ*m | (1) | 200nm | 15*µ*m | 20:80 | 14 | 2wt% | | | | water |
| 27 | (1) | 200nm | 2*µ*m | (1) | 200nm | 15*µ*m | 70:30 | 9 | 2wt% | | | | water |
| 28 | (1) | 200nm | 2*µ*m | (1) | 200nm | 15*µ*m | 30:70 | 12 | 2wt% | | | | water |
| 29 | (3) | 90nm | 1*µ*m | (5) | 150nm | 5*µ*m | 30:70 | 11 | 5wt% | | | | water |
| 30 | (5) | 90nm | 400nm | (3) | 90nm | 20*µ*m | 40:60 | 15 | 5wt% | | | | water |
| 31 | (1) | 200nm | 2*µ*m | (1) | 200nm | 15*µ*m | 5:95 | 1 | 2wt% | | | | water |
| 32 | (1) | 200nm | 2*µ*m | (1) | 200nm | 15*µ*m | 95:5 | 1 | 2wt% | | | | water |
| 33 | (1) | 200nm | 2*µ*m | (1) | 200nm | 15*µ*m | 20:80 | 1 | 0.01wt% | | | | water |
| 34 | (1) | 200nm | 2*µ*m | (1) | 200nm | 15*µ*m | 20:80 | 1 | 12wt% | | | | water |
| 35 | (5) | 90nm | 400nm | (3) | 90nm | 20*µ*m | 40:60 | 1 | 5wt% | | | | water |
| 36 | (1) | 200nm | 2*µ*m | (1) | 200nm | 15*µ*m | 20:80 | 22 | 2wt% | | | PVDF | NMP |
| 37 | (5) | 90nm | 400nm | (3) | 90nm | 20*µ*m | 40:60 | 23 | 2wt% | | | | NMP |
| 38 | (1) | 200nm | 2*µ*m | (1) | 200nm | 15*µ*m | 50:50 | 22 | 0.5wt% | | | | NMP |
| 39 | (1) | 200nm | 2*µ*m | (1) | 200nm | 15*µ*m | 50:50 | 23 | 0.05wt% | | | | NMP |
| 40 | (1) | 200nm | 2*µ*m | (1) | 200nm | 15*µ*m | 40:60 | 22 | 1wt% | | | | NMP |
| 41 | (1) | 200nm | 2*µ*m | (1) | 200nm | 15*µ*m | 20:80 | 1 | 2wt% | | KB | 30-J | water |
| 42 | (1) | 200nm | 2*µ*m | (1) | 200nm | 15*µ*m | 20:80 | 1 | 2wt% | | CNT | | water |
| 43 | (1) | 200nm | 2*µ*m | (1) | 200nm | 15*µ*m | 20:80 | 24 | 2wt% | | AB | | water |
| 44 | (1) | 200nm | 2*µ*m | (1) | 200nm | 15*µ*m | 20:80 | 25 | 2wt% | | | | water |
| 45 | (1) | 200nm | 2*µ*m | (1) | 200nm | 15*µ*m | 50:50 | 18 | 1wt% | | | | water |

[Table 4] Table 2-3

**Table 2-3: Comparative Examples 1 to 10**

| Comparative Examples | (A) first active materials | | | (B) second active materials | | | compounding ratio | dispersants | | thickening agents | conductive assistants | binders | solvents |
|---|---|---|---|---|---|---|---|---|---|---|---|---|---|
| | first active materials | primary particle diameter | average particle diameter | second active materials | primary particle diameter | average particle diameter | (A):(B) | dispersants No. | dispersant amount(*) | CMC^{(*)} | | | |
| 1 | (6) | 500nm | 5*µ*m | (4) | 500nm | 20*µ*m | 20:80 | 1 | 2wt% | | AB | 30-J | water |
| 2 | (4) | 300nm | 10*µ*m | (2) | 200nm | 50*µ*m | 20:80 | 1 | 2wt% | | | | water |
| 3 | - | - | - | (1) | 200nm | 15*µ*m | 0:100 | 1 | 2wt% | | | | water |
| 4 | (1) | 200nm | 2*µ*m | - | - | - | 100:0 | 1 | 2wt% | | | | water |
| 5 | - | - | - | (1) | 200nm | 15*µ*m | 0:100 | 22 | 2wt% | | | PVDF | NMP |
| 6 | (1) | 200nm | 2*µ*m | - | - | - | 100:0 | 22 | 2wt% | | | | NMP |
| 7 | (1) | 200nm | 2*µ*m | (1) | 200nm | 15*µ*m | 20:80 | none | - | | | 30-J | water |
| 8 | (1) | 200nm | 2*µ*m | (1) | 200nm | 15*µ*m | 20:80 | none | - | | | PVDF | NMP |
| 9 | (2)* | 200nm | 2*µ*m | (1) | 200nm | 15*µ*m | 50:50 | 1 | 2wt% | | | 30-J | water |
| 10 | (2)* | 200nm | 2*µ*m | (2) | 200nm | 50*µ*m | 50:50 | 1 | 1wt% | | | | water |

The details of the abbreviation described in Tables 2-1 to 2-3 are as follows.
PVDF: polyvinylidene fluoride (W#7200: manufactured by Kureha Corporation)
30-J: polytetrafluorethylene 30-J (manufactured by Du Pont-Mitsui Fluorochemicals Company, Ltd.)
AB: acetylene black (DENKA BLACK HS-100)
KB: Ketjen black (EC-300J: manufactured by Lion Corp.)
CNT: carbon nanotube (VGCF-H: manufactured by Showa Denko K.K.)
(*) The amount of the dispersants and thickening agents described in Tables is % by weight on the basis of the total weight of the active materials in the composition.

The first active material (2)* used in Comparative Examples 9 and 10 is particles prepared through grinding step not intended in the invention of this application.

### <Various types of evaluations>

With regard to the composition, electrode and coin-type battery produced in the examples and comparative examples, each property was evaluated in accordance with the method described below. Each evaluation result is shown in Tables 3-1 and 3-2.

### (Stability of coating liquid)

Each composition for forming an electrode of a lithium secondary battery prepared in the examples and comparative examples was stored at a temperature of 25°C and observed for the phenomena of aggregation and sedimentation of the solid matter and separation from the solvent. The determination was performed by visual observation to evaluate in accordance with the following criterion. Typically, the evaluations of B or higher are a level without any problems practically.

### (Evaluation criterion)

A: The phenomena were not observed for more than three weeks
B: The phenomena were observed during two to three weeks
C: The phenomena were observed during one to two weeks
D: The phenomena were observed within one week

### (Flexibility of electrode)

Each electrode sample produced in the examples and comparative examples was cut in a rectangular shape and the rectangular piece was wound so that the current collector side contacted with a metal bar with a diameter of 3 mm. The state of a crack on the electrode surface to be caused during the winding was determined by visual observation. Less cracking signifies better flexibility. The evaluation criterion is as follows. Typically, the evaluations of B or higher are a level without any problems practically.

### (Evaluation criterion)

A: No cracks are observed
B: Cracks are observed extremely partly
C: Cracks are observed partly
D: Cracks are observed wholly

### (Peel strength, adhesion properties)

The electrode sample produced in the examples and comparative examples, in which the film thickness of the mixture layer was 90 µm, was cut in from the electrode surface up to a depth leading to the current collector by using a knife. The cut was formed by six places lengthwise and breadthwise at intervals of 2 mm, so that the tessellated cut was formed. A pressure-sensitive adhesive tape was stuck to this cut and immediately peeled off, and the degree of peeling of the active material was evaluated by visual observation. The evaluation criterion is as follows. Typically, the evaluations of B or higher are a level without any problems practically.

### (Evaluation criterion)

A: No peeling is observed
B: Peeling is observed extremely partly
C: Peeling is observed approximately halfway
D: Peeling is observed mostly

### (Battery characteristics)

The charge and discharge measurement was performed for each coin-type battery produced in the examples and comparative examples by using a charge and discharge device (SM-8 manufactured by HOKUTO DENKO CORPORATION). In the case where the active material to be used was LiFePO₄, constant-current charge was continued at a charging current of 1.2 mA until a charging final voltage of 4.2 V. After the voltage of the battery reached 4.2 V, constant-current discharge was performed at a discharging current of 1.2 mA until a discharging final voltage of 2.0 V. These charge and discharge cycles were regarded as one cycle, and charge and discharge were repeated by five cycles to regard the fifth-cycle discharge capacity as the first-time discharge capacity. Incidentally, the first-time discharge capacity is regarded as a maintenance factor of 100%.

Next, after charging in the same manner as the fifth cycle to thereafter store in a constant temperature bath of 60°C for 100 hours, constant-current discharge was performed at a discharging current of 1.2 mA until a discharging final voltage of 2.0 V to calculate the rate of change. The numerical value closer to 100% signifies better battery characteristics. The results shown in Tables 3-1 and 3-2 are results evaluated in accordance with the following criterion.

### (Evaluation criterion)

A: The rate of change is 95% or more. Particularly excellent [0214]
B: The rate of change is 90% or more and less than 95%. A level without any problems practically
C: The rate of change is 80% or more and less than 90%. A usable level though problematic
D: The rate of change is less than 80%. An unusable level with some problems practically

[Table 5] Table 3-1

**Table 3-1: Results of Examples 1 to 45**

| Examples | Stability of coating liquid | Peel strength | Flexibility of electrode | | | Battery characteristics (density of electrode, 2.0 g/cc) | | |
|---|---|---|---|---|---|---|---|---|
| | | | Film thickness | | | Film thickness | | |
| | | | 60*µ*m | 90*µ*m | 120*µ*m | 60*µ*m | 90*µ*m | 120*µ*m |
| 1 | A | A | A | A | A | A | A | A |
| 2 | A | A | A | A | A | A | A | A |
| 3 | A | A | A | A | A | A | A | A |
| 4 | A | A | A | A | A | A | A | A |
| 5 | A | A | A | A | A | A | A | A |
| 6 | A | A | A | A | A | A | A | A |
| 7 | A | A | A | A | A | A | A | A |
| 8 | B | A | A | A | B | A | A | B |
| 9 | A | A | A | A | A | A | A | A |
| 10 | A | A | A | A | A | A | A | A |
| 11 | A | A | A | A | A | A | A | A |
| 12 | B | A | A | A | B | A | A | B |
| 13 | A | A | A | A | A | A | A | A |
| 14 | A | A | A | A | A | A | A | A |
| 15 | A | A | A | A | A | A | A | A |
| 16 | A | A | A | A | A | A | A | A |
| 17 | B | A | A | A | B | A | A | B |
| 18 | C | C | A | A | C | A | A | C |
| 19 | C | C | A | A | C | A | A | C |
| 20 | C | C | A | A | C | A | A | C |
| 21 | C | C | A | A | C | A | A | C |
| 22 | C | C | A | A | C | A | A | C |
| 23 | C | C | A | A | C | A | A | C |
| 24 | C | C | A | A | C | A | A | C |
| 25 | C | C | A | A | C | A | A | C |
| 26 | C | C | A | A | C | A | A | C |
| 27 | A | A | A | A | A | A | A | A |
| 28 | A | A | A | A | A | A | A | A |
| 29 | A | A | A | A | A | A | A | A |
| 30 | C | C | A | A | C | A | A | C |
| 31 | A | C | A | A | A | A | C | C |
| 32 | A | A | A | C | C | A | A | C |
| 33 | C | C | C | C | C | A | C | C |
| 34 | A | A | A | A | A | C | C | C |
| 35 | A | A | A | A | B | A | A | B |
| 36 | A | A | A | A | A | A | A | A |
| 37 | B | A | A | A | A | A | A | A |
| 38 | A | A | A | A | A | A | A | A |
| 39 | A | A | A | A | A | A | A | A |
| 40 | A | A | A | A | A | A | A | A |
| 41 | B | A | A | A | A | A | A | A |
| 42 | C | A | A | A | A | A | A | A |
| 43 | A | A | A | A | A | A | A | B |
| 44 | C | C | A | A | C | A | A | C |
| 45 | A | A | A | A | A | A | A | A |

[Table 6] Table 3-2

**Table 3-2: Results of Comparative Examples 1 to 10**

| Comparative Examples | Stability of coating liquid | Peel strength | Flexibility of electrode | | | Battery characteristics (density of electrode, 2.0 g/cc) | | |
|---|---|---|---|---|---|---|---|---|
| | | | Film thickness | | | Film thickness | | |
| | | | 60*µ*m | 90*µ*m | 120*µ*m | 60*µ*m | 90*µ*m | 120*µ*m |
| 1 | A | A | A | A | A | A | C | D |
| 2 | A | D | D | A | A | D | C | C |
| 3 | A | D | A | A | A | C | D | D |
| 4 | A | A | A | C | D | A | C | D |
| 5 | A | D | A | A | C | C | D | D |
| 6 | A | A | A | A | D | A | A | C |
| 7 | D | C | C | C | C | A | C | C |
| 8 | D | C | C | C | C | A | C | C |
| 9 | B | A | A | A | A | D | D | D |
| 10 | B | A | A | A | A | D | D | D |

## Claims

1. A composition for forming an electrode of a lithium secondary battery comprising:
a first active material;
a second active material;
a dispersant;
a binder; and
a solvent,
wherein: the first active material is a secondary particle formed from a coated primary particle that a surface of a primary particle of a lithium metal phosphate composite particle represented by the following general formula (1) is coated with conductive carbon, wherein an average particle diameter of the coated primary particle is from 50 to 300 nm, and an average particle diameter of the secondary particle is from 300 nm to 5 µm; and
the second active material is a granulated particle formed from a coated primary particle that a surface of a primary particle of a lithium metal phosphate composite particle represented by the following general formula (1) is coated with conductive carbon, wherein an average particle diameter of the coated primary particle is from 50 to 300 nm, and an average particle diameter of the granulated particle is from 5 to 30 µm.
General formula (1): LiFe₁₋ₓMₓPO₄ (0 ≤ x ≤ 1)
(In the formula, M denotes a metallic element of at least one type selected from the group consisting of Mn, Co, Ni and V.)

2. The composition according to claim 1, wherein the second active material is a granulated particle produced by using the first active material.

3. The composition according to claim 1 or 2, wherein the dispersant has a functional group of at least one type selected from the group consisting of an acidic functional group, a basic functional group and a hydroxyl group.

4. The composition according to any one of claims 1 to 3, wherein a content of the first active material is within a range of 10 to 90% by weight on the basis of the total weight of the first active material particle and the second active material particle.

5. The composition according to any one of claims 1 to 4, further comprising a conductive particulate carbon material.

6. The composition according to any one of claims 1 to 5, wherein the conductive particulate carbon material contains at least one type selected from the group consisting of carbon black, graphite, fibrous carbon and graphene.

7. An electrode for a lithium secondary battery having a current collector and a mixture layer formed on a surface of the current collector, wherein the mixture layer is a coating film formed by using the composition according to any one of claims 1 to 6.

8. The electrode according to claim 7, wherein a dry film thickness of the coating film is 90 µm or more.

9. A lithium secondary battery having a cathode, an anode and a liquid electrolyte, wherein the cathode is the electrode according to claim 7 or 8.
